# EUROPEAN PATENT APPLICATION

(11) **EP 1 006 467 A2**
(43) Date of publication of application: **07.06.2000**
(21) Application number: 99402878.5
(22) Date of filing: 19.11.1999
(51) Int. Cl.: G06F 17/30

(54) **Method and device for the automatic classification of sites or users of a communication network**

(30) Priority: 25.11.1998 FR 9814836
(71) Applicant: CANON RESEARCH CENTRE-FRANCE S.A., 35517 Cesson Sevigne Cedex (FR)
(72) Inventor: Moreau, Jean-Jacques, 35000 Rennes (FR)
(74) Representative: Rinuy, Santarelli

(57) **Abstract**

A device for the automatic classification of the sites in a computer network (1) has:
- means (10) of receiving computer requests sent by users (4) of the computer network (1);
- means (7) of recording, on each site (S2), associations of said site and sites pointing to said site from the reception of computer requests sent by users (4) of the computer network (1);
- a global table (100) adapted to store associations of pointing sites and pointed-to sites;
- means (30) of receiving global tables (Tv) of one or more adjacent sites, the global table (Tv) of an adjacent site storing at least one association containing said site; and
- means (101) of updating the global table (100) of a site from associations recorded (6) and associations stored in a global table (Tv) of one or more adjacent sites.

Use notably for forming groups of sites or users.

## Description

The present invention concerns a method and device for the automatic classification of sites or users of a communication network, in a global classification table.

It also concerns a method and device for transmitting a global table between different sites in the communication network, making it possible to implement the aforementioned automatic classification method.

Finally, it concerns a method and device for constituting a group of sites or a group of users of the communication network, in direct connection with the global tables managed by the method for the automatic classification of sites or users in accordance with the invention.

The present invention sits more generally within the field of computer communication networks which make it possible to transfer information between computer servers storing electronic documents, and one or more users.

The present invention applies to communication networks which define a protocol for communication between computers enabling the computers and peripherals implementing this protocol to exchange documents.

The communication networks also define an annotation language which makes it possible in particular to link documents together by means of hypertext links or to directly link sites containing several documents together. Each hypertext link, normally referred to as a pointer, is included in a first document or site and contains data concerning the address of a second document or second site. The latter can of course in its turn contain pointers to other documents or sites and so on. A graph of documents or sites linked by hypertext links is obtained, which may be complex and bulky.

Having regard to the increase in the numbers of computer sites available in the computer networks existing on a global scale, such as the Internet, it has become essential to be able to manage all these sites in order to facilitate access thereto and notably to enable a user to effectively seek the information interesting him.

Given the size and complexity of a wide-area network, the user cannot run through it in its entirety in order to seek information. This is notably the case with the World Wide Web, built on top of the Internet.

Search tools have been set up to facilitate this search. They generally make it possible, from an indexing of the documents stored, to search by key words. However, the results are very often so great in number that they make it very difficult to use them.

In addition, when the user has found a site which may meet the object of his search, it is very difficult for him to find other sites dealing with the same subject.

To resolve this problem, search tools are known which have attempted to resolve this problem by manually classifying sites in the network by categories. Such a classification is used, for example, by the search engine Yahoo!®.

However, this method has several drawbacks, notably because it is implemented manually. It is thus centralised and requires taking a census of all the sites existing on the same computer in order to classify them. In addition, it is not very reliable and always exhibits a certain delay time compared with new sites or the change in their content over time.

Moreover, it can consider only a limited set of categories and cannot physically take a census of all the existing sites. Classifying the sites is also dependent on the persons carrying it out and the choice of sites is made in the end according to criteria peculiar to only a small number of persons.

In the patent application FR 98 11489 in the name of the Applicant, a method of managing a table of links between documents linked by hypertext links and stored on a computer server is known. The computer server is connected by a communication network to users who can set up a computer request to request the transfer, via the communication network, of a document linked by a hypertext link to a previously requested document.

The computer server creates and updates, from the reception of the computer request, a table of links in which there are stored associations representing the hypertext links linking a first document previously requested and a document requested from the first document. A weighting factor, associated with each association and incremented each time the hypertext link is run through by the users of the communication network, is also stored in the table of links.

Thus the table of links is created iteratively according to the successive requests sent by the users connected to the computer server by the communication network.

Such a management method makes it possible to create, in a similar fashion, a table of links from the hypertext links linking the sites to each other, on a site in the network. However, such a table makes it possible to know only the sites in the communication network which point to the site itself and cannot be used effectively to create groups of sites on the same subject or groups of users interested in the same group of sites.

The aim of the present invention is to propose a method of classifying sites or users which makes it possible to effect this classification automatically and to carry out groupings of sites in the communication network in a decentralised fashion.

The method for the automatic classification of sites in a computer network is characterised in that it includes the following steps:
- the recording on each site of associations of said site and pointing sites pointing to said site, from the reception of computer requests sent by users of the computer network;
- the storage in a global table of associations of pointing sites and pointed-to sites; and
- the updating of the said global table of a site from associations recorded and associations stored in a global table of one or more adjacent sites, the global table of an adjacent site storing at least one association containing said site.

Correlatively, the present invention concerns a device for the automatic classification of sites in a computer network, characterised in that it has:
- means of receiving computer requests sent by users of the computer network;
- means of recording, on each site, associations of said site and pointing sites pointing to said site, from the reception of computer requests sent by users of the computer network;
- a global table adapted to store associations of pointing sites and pointed-to sites;
- means of receiving global tables of one or more adjacent sites, the global table of an adjacent site storing at least one association containing said site; and
- means of updating said global table of a site from associations recorded and associations stored in a global table of one or more adjacent sites.

Similarly, a method for the automatic classification of users of a computer network is characterised in that it includes the following steps:
- the recording on each site of associations of said visited site and users, from the reception of computer requests sent by said users;
- the storage in a global table of associations of users and visited sites;
- the storage on each site of the pointing sites pointing to said site from the reception of computer requests sent by said users; and
- the updating of said global table of a site from associations recorded and associations stored in a global table of one or more adjacent sites, an adjacent site storing at least said site as a visited site in the global table or as a pointing site.

Correlatively, the present invention also concerns a device for the automatic classification of users of a computer network, characterised in that it has:
- means of receiving computer requests sent by users of the computer network;
- means of recording, on each site, associations of said site visited and users, from the reception of computer requests sent by said users;
- a global table adapted to store associations of users and sites visited;
- means of storing, on each site, pointing sites pointing to said site from the reception of computer requests sent by said users;
- means of receiving global tables of one or more adjacent sites, an adjacent site storing at least said site as a visited site in said global table or as a pointing site; and
- means of updating said global table of a site from associations recorded and associations stored in a global table of one or more adjacent sites.

Thus, by virtue of the invention, it is possible to classify, on a given site, users or sites in a global table, not only from associations recorded on the site from computer requests intended for it, but also from associations stored in global tables of adjacent sites.

Thus each global table managed by a site is updated from associations recorded on the site, and which include by very design the site as the pointed-to site or visited site, and from associations recorded in global tables of adjacent sites, which makes it possible to store, in the global table of the site, associations whose pointed-to or visited site is different from the site itself.

In this way there is obtained a global table on a given site which not only lists the sites in the network which point directly to the given site, but also the furthest away sites, which point to the given site only through other sites in the network.

It is thus possible to automatically classify, directly from computer requests sent by the users of the communication network, the sites and the users, and this on each site in the computer network implementing the classification method according to the invention, in a decentralised fashion.

According to a preferred version of the invention, the method for the automatic classification of sites or users in accordance with the invention is characterised in that, with each recording of associations there is associated a weighting factor representing the occurrence of computer requests comprising said association, each association of the global table being associated with a set of parameters comprising at least one weighting factor updated from the weighting factors of the associations recorded and associations stored in a global table of one or more adjacent sites.

The weighting factor makes it possible to weight the associations stored in the global table of a site and notably to sort the sites and users stored in the global table in order to retain only the sites or users to which the site most relates.

It also makes it possible to manage the global table by allowing the elimination of certain associations with a low weighting factor in order to prevent an unlimited increase in the size of the global table.

According to another preferred version of the invention, the set of parameters comprises a generation indicator adapted to date each updating of the parameters associated with each association, the classification method also including a step of comparing the generation indicators associated with an identical association of the global table to be updated and the global table of the adjacent site or sites, the updating of the parameters associated with said association being effected only if the generation indicator for the association of the global table of the adjacent site or sites indicates a more recent date than the generation indicator for the association of the global table to be updated.

This generation indicator associated with each association makes it possible to update the global table only with the most recent data from the communication network. Thus, when an association is transmitted to a given site via global tables by different paths on the communication network, for example by propagating on a different number of sites, it is important to be able to date the last updating of the parameters of an association of each global table. Thus more recent data are not replaced by data which are older although being communicated later to the given site because of the difference in the path followed.

Preferably, without requiring the presence of a clock associated with each site, and moreover a clock common to the whole of the communication network, the generation indicator for an association is a real number incremented at each updating of the parameters associated with said association using one of the associations recorded on said site.

The updating of the parameters associated with said association is then effected only if the generation indicator of the association of the global table of the adjacent site or sites is greater than the generation indicator of the association of the global table to be updated.

According to another preferred version of the invention, the set of parameters of an association comprises a transmission indicator representing the number of transmissions of said association on a site to another site of the computer network.

This transmission indicator makes it possible to prevent the transmission of the associations of a global table being unlimited in the communication network.

Preferably, in a practical embodiment of the invention, the transmission indicator is a real number initialised to a predetermined maximum value at the time of the first storage of said association in the global table and decremented at each transmission of said association from one site to another site in the computer network.

The maximum value of the indicator corresponds to the maximum distance on the communication network to which it is possible to transmit the association from the initial site on which this association was stored for the first time.

According to another aspect of the invention, a method of transmitting a global table of a site for implementing the updating step of the method of classifying sites or users according to the invention is characterised in that it includes the following steps:
- the extraction of the addresses of the sites stored on said site;
- the elimination from said global table of the site of one or more associations when the transmission indicator associated with said association or associations indicates that a predetermined number of transmissions have been performed; and
- the transfer of said global table to the stored sites.

Correlatively, the present invention also concerns a device for transmitting a global table of a site to means of receiving global tables from a site or user classification device, characterised in that it has:
- means of extracting addresses of the sites stored on said site;
- means of comparing the transmission indicator associated with each association of said global table with a predetermined maximum value;
- means of eliminating one or more associations from said global table when the transmission indicator associated with said association or associations indicates that a predetermined number of transmissions have been performed; and
- means of transferring said global table to the stored sites.

The transmission method thus makes it possible to propagate each global table on the communication network and to send them to the network sites. The sites are linked directly, by a pointer, or indirectly, by means of other sites, to a site on which said global table is stored.

The propagation of the information on the network is limited by virtue of the transmission indicator so that an association is transmitted only to the closest sites, in the graph formed by the pointer linking the network sites together, from the initial site on which this association is stored for the first time.

According to a third aspect of the invention, a method of constituting a grouping of sites from a global table managed by the method for the automatic classification of sites according to the first aspect of the invention is characterised in that there is calculated, for each site stored in said global table, an associated weight, equal to the average of the weighting factors associated with the associations comprising said site as a pointing site or pointed-to site, and the said sites and the associated weight are stored in memory.

Correlatively, the invention concerns a device for constituting a grouping of sites from a global table of an automatic site classification device, characterised in that it has:
- means of calculating, for each site stored in said global table, an associated weight, equal to the average of the weighting factors associated with the associations comprising said site as a pointing site or pointed-to site; and
- means of storing said sites and the associated weight.

Thus, using a global table stored on a site, it is possible to determine all the sites linked to this site with their associated weighting factor.

A grouping of sites is thus effected, in a decentralised fashion on each site in the communication network, automatically from the requests sent by the users of the network and the transmission of the global tables.

Preferably, the method of constituting a grouping of sites comprises a filtering step in which the stored sites with the lowest weighting factors are eliminated so that a predetermined number of sites is stored.

The response sent to the user who wishes to know the sites linked to a given site can thus include only a maximum number of responses, the sites with the lowest weight being eliminated during the filtering step.

According to a fourth aspect of the invention, a method of constituting a group of users from a global table managed by the automatic user classification method according to the first aspect of the invention, the said group of users using a group of sites formed as described previously, is characterised in that it includes the following steps:
- the calculation, for each user stored in said global table, of an associated weighting, equal to the mean of the weighting factors associated with the association comprising said user;
- the elimination of the users having an associated weighting lower than a predetermined threshold value;
- the extraction from the global table of the list of the sites visited by each user;
- the calculation for each user of the sites common to the group of sites and to the list of sites visited;
- the calculation for each user of the number of sites common to the group of sites and to the list of sites visited;
- the calculation of the number of sites stored in the group of sites; and
- the storage of said user in the user group when the number of common sites is greater than a predetermined proportion of the number of sites stored in the group of sites.

Correlatively, a device for constituting a group of users from a global table of a device for the automatic classification of users, said group of users using a group of sites constituted as described previously, is characterised in that it comprises:
- means of calculating, for each user stored in said global table, an associated weighting, equal to the mean of the weighting factors associated with the associations comprising said user;
- means of comparing the associated weightings with a predetermined threshold value;
- means of eliminating the users with an associated weighting less than said predetermined threshold value;
- means of extracting, from the global table, the list of sites visited by each user;
- means of calculating, for each user, sites common to the group of sites and to the list of sites visited;
- means of calculating, for each user, the number of sites common to the group of sites and to the list of sites visited;
- means of calculating the number of sites stored in the group of sites;
- means of comparing said number of common sites and said number of sites stored; and
- means of storing said user in the group of users when the number of common sites is greater than a predetermined proportion of the number of sites stored in the group of sites.

The method of constituting a group of users thus makes it possible, from the global table stored on a site, to create a group of users who have visited at least a certain proportion of the sites in a site group. It is thus possible to constitute a group of users seeking similar information on the communication network and enable them to come into contact with each other by the conventional means existing on the communication networks.

Preferably, for a significant result, a user is stored in the group of users when the number of common sites is greater than one fifth of the number of sites stored in the group of sites.

In addition, the method of constituting a group of users also comprises a filtering step in which the stored users with the lowest weighting factors are eliminated so that a predetermined number of users is stored in the group of users.

As with the constitution of a group of sites, the filtering step makes it possible to limit the number of users cited in the response sent to the user who wishes to know the users interested in a given site.

The present invention also concerns a computer having means of implementing a site or user classification method according to the invention.

This computer can also have means of implementing a method of transmitting a global table in accordance with a second aspect of the invention and/or means of implementing a method of constituting a group of sites in accordance with a third aspect of the invention. In the latter case, the computer can also have means of implementing a method of constituting a group of users using a group of sites in accordance with a fourth aspect of the invention.

Correlatively, the invention also concerns a computer having a device for the automatic classification of sites or users in accordance with the invention.

This computer can also have a device for transmitting a global table and/or a device for constituting a group of sites in accordance with the invention. In the latter case, the computer can also have a device for constituting a group of users using a group of sites in accordance with the invention.

Moreover, the invention also concerns particularly a computer server having an automatic site classification device, a global table transmission device and a device for constituting a group of sites according to the invention.

In a preferred and complete version of the invention, the computer server also has a user classification device and a device for constituting a group of users using a group of sites in accordance with the invention.

Preferably, a communication network is characterised in that it has several computer servers as described previously.

Finally, the invention concerns in general terms a communication network having means of implementing a site or user classification method according to the first aspect of the invention. This communication network can include means of implementing a method of transmitting a global table in accordance with the second aspect of the invention and/or have means of implementing a method of constituting a group of sites in accordance with the third aspect of the invention. In the latter case, the communication network can have means of implementing a method of constituting a group of users using a group of sites in accordance with the fourth aspect of the invention.

Correlatively, the invention concerns a communication network having an automatic site or user classification device according to the invention. It can have a device for transmitting a global table and/or a device for constituting a group of sites in accordance with the invention. In the latter case, the communication network can have a device for constituting a group of users using a group of sites in accordance with the invention.

The communication networks described above preferably have several computer servers forming a wide-area network, for which the present invention is particularly well adapted to create groups of sites or users.

The advantages and characteristics of these devices, computers, computer servers and communication networks are similar to those described previously for the different methods according to the invention.

An information storage medium which can be read by a computer or by a microprocessor, integrated or not into this device, possibly removable, stores a program implementing the automatic site or user classification method according to a first aspect of the invention, or the transmission method according to a second aspect of the invention, or a method of constituting a group of sites in accordance with a third aspect of the invention, or a method of constituting a group of users using a group of sites in accordance with a fourth aspect of the invention.

Other particularities and advantages of the invention will also emerge from the following description of a particular embodiment of the invention.

In the accompanying drawings, given by way of non-limitative examples:
- Figure 1 is a block diagram illustrating a communication network according to one embodiment of the invention;
- Figure 2 is a diagram illustrating a graph of sites of a communication network linked by pointers;
- Figure 3 is a block diagram illustrating recording means of an automatic site classification device according to the invention;
- Figure 4 is a block diagram illustrating recording means of an automatic user classification device according to the invention;
- Figure 5 depicts a table of site links;
- Figure 6 depicts a table of user links;
- Figure 7 is a block diagram illustrating means of updating a global table of an automatic site or user classification device according to the invention;
- Figure 8 is a block diagram illustrating a computer and peripherals adapted to implement the classification, transmission and group constitution methods in accordance with the invention;
- Figure 9 is an algorithm detailing the recording step of the automatic site classification method according to the invention;
- Figure 10 is an algorithm detailing the recording step of the user classification method according to the invention;
- Figure 11 is an algorithm illustrating the steps for storing and updating the global table from the table of links of the automatic site or user classification method according to the invention;
- Figure 12 is an algorithm illustrating the steps for storing and updating the global table from a global table of an adjacent site of the automatic site or user classification method according to the invention;
- Figure 13 depicts a global table of sites according to one embodiment of the invention;
- Figure 14 depicts a global user table according to one embodiment;
- Figure 15 is a block diagram illustrating two computer servers adapted to implement the method of transmitting a global table according to the invention;
- Figure 16 is a block diagram illustrating a transmission device according to the invention;
- Figure 17 is an algorithm of the method of transmitting a global site table according to one embodiment of the invention;
- Figure 18 is an algorithm of the method of transmitting a global table of users according to one embodiment of the invention;
- Figure 19 is a block diagram illustrating a device for constituting a group of sites according to the invention;
- Figure 20 is an algorithm of the method of constituting a group of sites according to the invention;
- Figure 21 illustrates schematically several groups of sites constituted in accordance with the method of the invention;
- Figure 22 is a block diagram illustrating a device for constituting a group of users according to the invention; and
- Figure 23 is an algorithm of the method of constituting a group of users according to the invention.

The present invention, one embodiment of which will be described below, applies in particular to wide-area communication networks. Such a communications network has a very large number of computer servers connected together.

The network can, by way of example, be a worldwide communication network, such as the Internet, built on top of a communication protocol enabling the computers connected to the communication network to exchange documents.

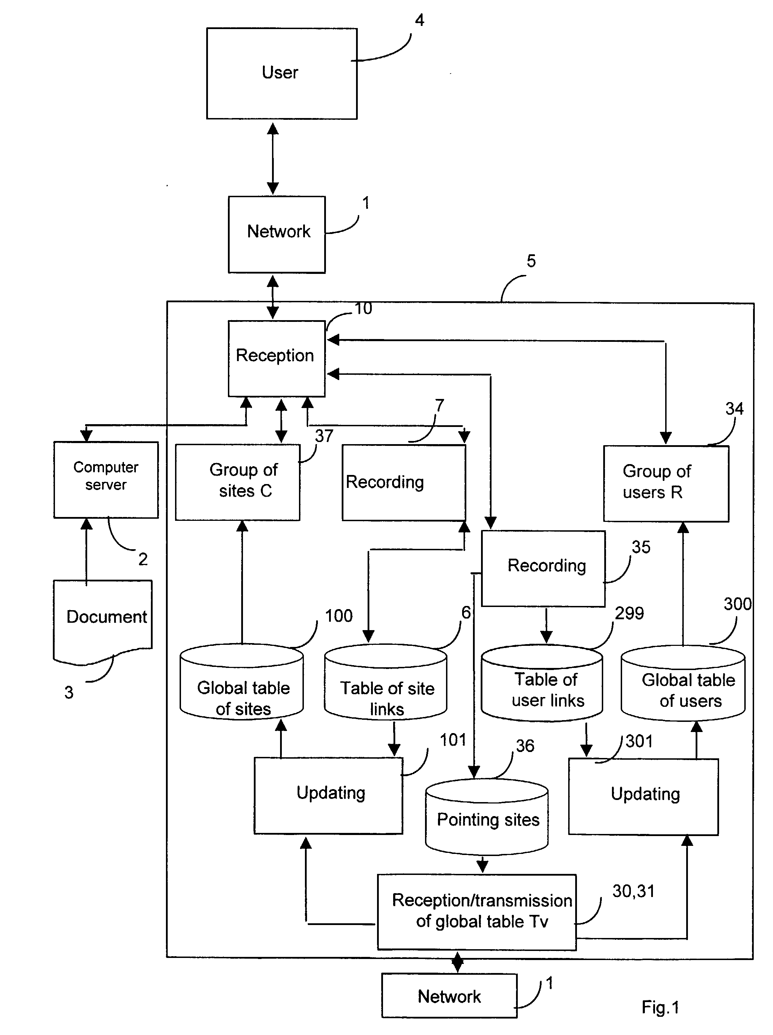

As illustrated in Figure 1, the documents are stored at a computer server 2 capable of recovering a document in a memory 3 and serving it to a user 4 by means of the communication network 1.

Although only a computer server 2 and a user 4 are illustrated for reasons of simplification in Figure 1, the communication network 1 is in general connected to numerous computer servers 2 and numerous users 4.

It should also be stated that, throughout the remainder of the description, the concept of user is employed to designate a data-processing system such as a computer adapted to establish computer requests for ordering a document stored on a computer server and that the latter is adapted to respond to this computer request. On the scale of a communication network, the same data-processing system such as a computer can alternatively be considered to be a user of the communication network (also referred to as the client) or as a computer server.

An information system, where the information is stored in documents (texts, images, sounds etc), is built on top of the communication network.

In the present invention, this information system is a hypertext system so that the documents stored have hypertext links linking certain documents together. In other words, documents have pointers pointing to other documents and the user can request the transmission of these other documents by activating the pointers in the initial document.

An example of a hypertext system built on top of the Internet communication network is the WWW (World Wide Web) system, and the communication protocol used can, by way of example, be the HTTP (HyperText Transfer Protocol).

In practice, when the initial document is displayed by the user, the hypertext links are shown in the form of an icon or a word for example, the user being able to request the associated document by clicking with a mouse for example on the word or icon chosen. A browser associated with the user contains a computer program adapted to generate a computer request containing the address of the document associated with the pointer.

In a communication network, all the documents grouped in the memory 3 of a computer server 2 form a computer site, so that the communication network 1 makes it possible to connect together a very large number of sites.

In the same way as the documents, the sites can point to each other by means of a pointer included in a site. It is also considered that a site points to another site if at least one document in the first site has a pointer to a document in the other site.

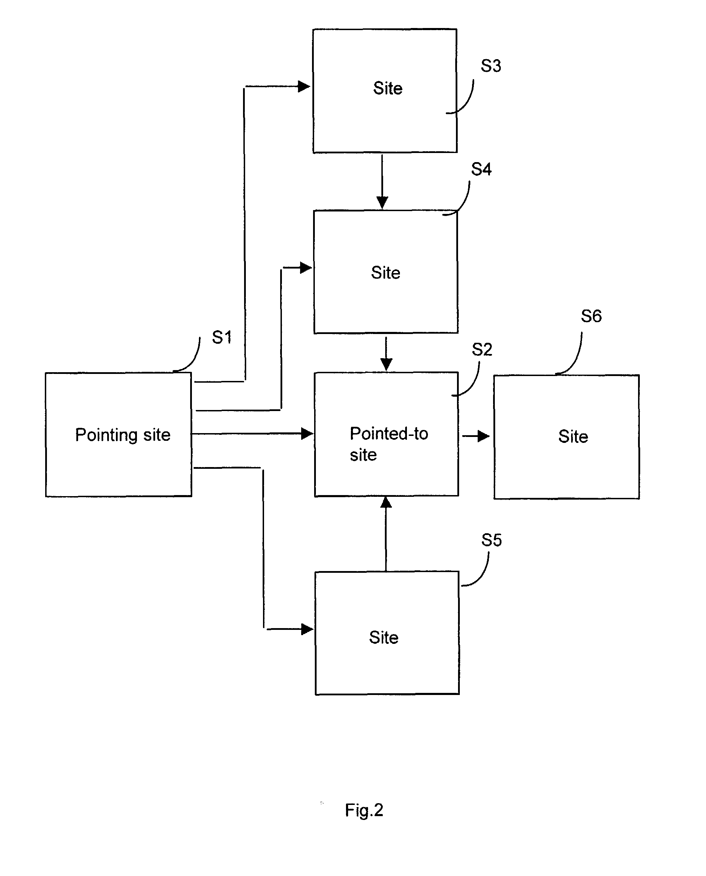

An example of a graph thus formed by the sites in a communication network, and intended solely to give a clearer idea for the remainder of the disclosure of an example embodiment of the present invention, is illustrated in Figure 2.

A pointing site S1 points to a pointed-to site S2, this site being able in its turn to contain documents including hypertext links with several other documents in a site S6. The site S1 also points to the sites S3, S4 and S5, the site S3 to the site S4, the site S4 to the site S2 and the site S5 to the site S2.

Each document in the communication network has a unique electronic address (Uniform Resource Locator) enabling each document to be located in the hypertext system. This address has a part for uniquely locating the site on which the document is stored and a complementary part for locating the document on the site. By convention, the part of the address for locating the site will be denoted URL throughout the remainder of the description, whilst the supplementary address will be denoted URL'.

The user 4 is then adapted to establish a computer request HTTP for requesting the communication of a document stored on a computer server 2 via the communication network 1.

By way of example, the user 4 can request a document D2 stored on the site S2 using a pointer included in a document D1 stored on the site S1.

Implementing the automatic site and user classification method, this computer request includes the requested electronic address URL'2 of the requested document D2 and the prior electronic address URL'1 of the prior document D1, requested previously by the user 4. The generation of such a computer request is explained in patent application 98 11489 and will not be described in detail here.

In summary, the computer request can contain a supplementary field in which the browser associated with the user enters the electronic address URL'1 of the prior document D1 before transmitting the request to the computer server 2.

The two electronic addresses URL'1, URL'2 can also be associated with each other in the same field of the computer request sent to the computer server. There is added, for example, to the electronic address URL'2 of the requested document D2 a particular suffix representing the electronic address URL'1 of the prior document D1. Such a computer request is for example described in detail in US patent 5 717 860 (Graber et al).

This computer request is transmitted by the communication network 1 to the computer server 5 in accordance with the invention which will be described in detail below.

In Figure 1, the computer server 5 adapted to implement the present invention is physically distinct from the computer server 2 adapted to respond to the requests of the users 4 and to supply the requested documents. However, the computer servers 2 and 5 could be formed by one and the same appliance, a single microprocessor storing all the programs for implementing the invention and producing responses to the requests received via the communication network 1.

In the remainder of the description, it will be considered that the computer server 2, 5 stores a set of documents grouped together in a computer site S2 connected to the other sites in the network as explained below with reference to the graph in Figure 2.

In accordance with the invention, the computer server 5 has an automatic site classification device 10, 7, 6, 30, 101 and 100, an automatic user classification device 10, 35, 36, 299, 30, 301 and 300, a device for transmitting a global table 31, a device for constituting a group of sites 37 and a device for constituting a group of users 34. These different devices will be described below as well as the methods used.

In accordance with the invention, the device for the automatic classification of sites in a computer network has firstly means 10 of receiving computer requests sent by users 4 of the computer network 1.

These reception means 10 transmit on the one hand the computer request to the computer server 2 proper so that the latter processes this computer request in a conventional fashion in order to supply the requested document D2.

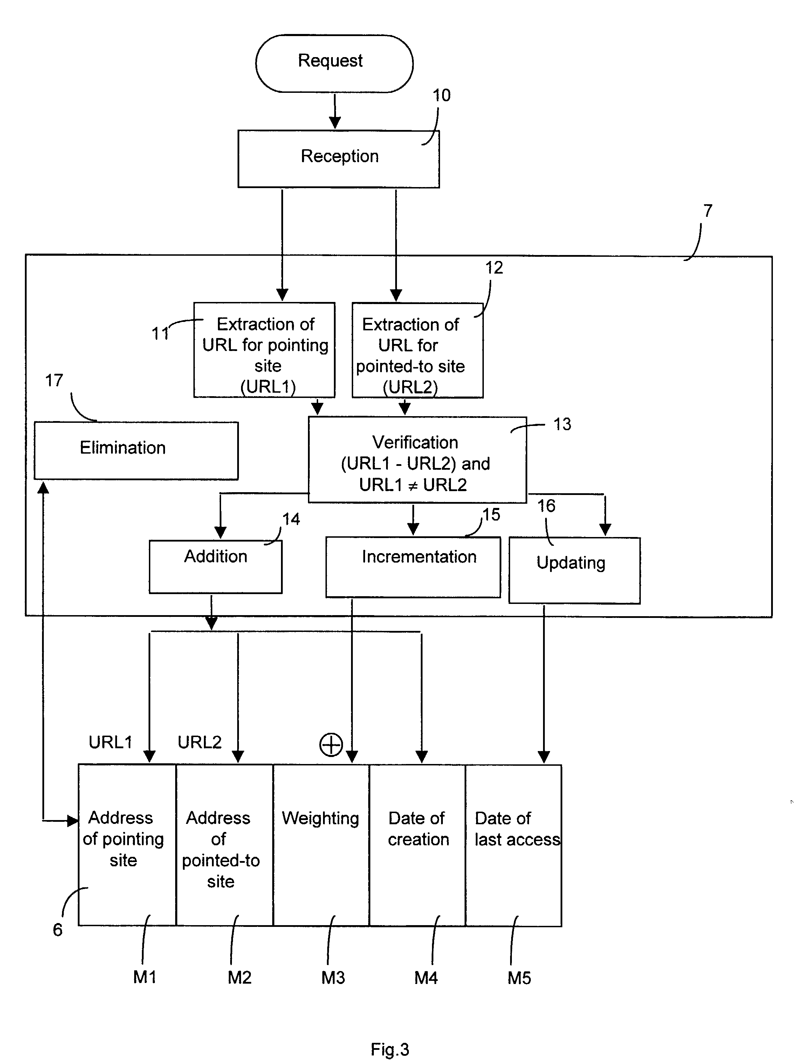

In addition, and directly in connection with the present invention, the computer request is transmitted to means 7 of recording on the site S2 associations of the said site and pointing sites pointing to said site, as illustrated in Figure 3.

These recording means 7 include:
- means 11 of extracting from the computer request the electronic address URL1 of the pointing site S1;
- means 12 of extracting from the computer request the electronic address URL2 of the pointed-to site S2;
- means 13 of verifying on the one hand the difference between the two extracted addresses URL1 and URL2 so that the pointing site S1 and the pointed-to site S2 are actually different, and on the other hand the existence or not of the association URL1-URL2 of the electronic addresses of the pointing site S1 and the pointed-to site S2 in a table of links of sites 6;
- means 14 of adding this association URL1-URL2 to a table of links of the sites 6 if this association does not exist in this table of links 6;
- means 15 of incrementing a weighting factor associated with this association URL1-URL2 in a table of links of the sites 6 each time a computer request containing this association URL1-URL2 is received. This weighting factor thus represents the occurrence of computer requests containing the association URL1-URL2.

The table of links 6 is incorporated in a memory containing several registers adapted to record variables modified during the running of the management program. It contains principally registers M1 and M2 for storing the associated addresses URL1, URL2 of a pointing site S1 and pointed-to site S2, and a register M3 for storing the weighting factor incremented at each new reception of a computer request containing this association.

In the example embodiment described, and non-limitatively, the recording means 7 also have means 16 of updating a last-access date associated with the association URL1-URL2 in the table of links 6, the last-access date corresponding to the date of reception of the last computer request containing this association.

The table of links 6 also contains a register M5 for storing this last-access date.

Similarly, and also by way of non-limitative example, the table of links 6 also has means 14 of adding a date of creation associated with the association URL1-URL2, the date of creation corresponding to the date of receipt of the first computer request containing this association.

The table of links 6 also contains a register M4 for storing this date of creation.

The recording means 7 also have elimination means 17 adapted to eliminate associations of the table of links of the site 6, notably when the number of associations exceeds a predetermined threshold value. The last-access date and the weighting factor make it possible to eliminate the oldest associations or the ones least used by the users 4 of the communication network 1.

The management of such a table of links of the sites 6 is described more particularly in the patent application FR 98 11489, and will not be described in detail here.

The recording means 7 could also be adapted to extract and store, in the table of links 6, key words associated with or issuing from, by convention techniques, the documents D1 and D2. The use of such key words will be explained subsequently.

The table of links 6 then contains supplementary registers for storing this additional information.

In an entirely similar fashion, a device for the automatic classification of the users of a computer network has firstly means 10 of receiving computer requests sent by users 4 of the computer network 1. In the example embodiment described, these reception means are common with the automatic site classification device.

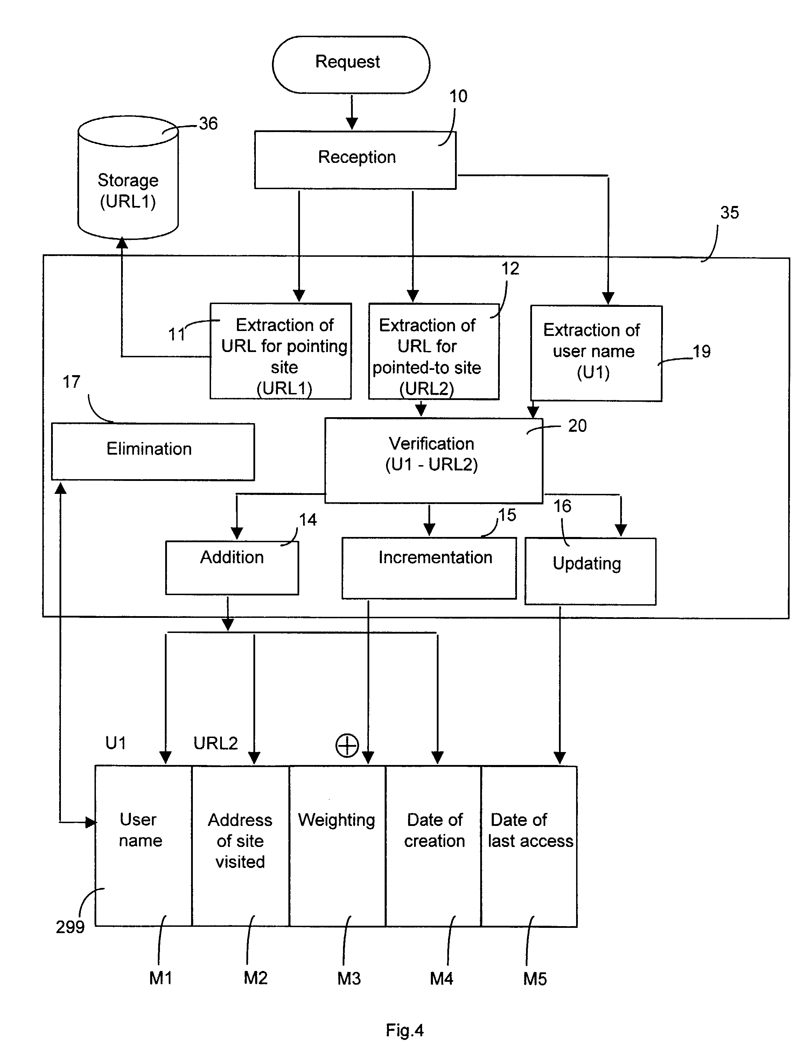

The computer request is then also transmitted to means 35 of recording associations of the visited site S2, identified by its electronic address URL2, and users, for example U1, identified by its name, the name of its computer domain, etc, as illustrated in Figure 4.

These recording means 35 are similar to the recording means 7 described previously and also have:
- means 11 of extracting from the computer request the electronic address URL1 of the pointing site S1;
- means 12 of extracting from the computer request the electronic address URL2 of the pointed-to site S2, also referred to as the visited site.

They also have means 13 of extracting the name U1 of the user 4 who sent the computer request.

Verification means 20 make it possible to verify the existence or not of the association U1-URL2 of the name of the user and the electronic address of the visited site S2 in a table of links of the users 299.

Addition means 14 add this association U1-URL2 in the table of links of the users 299 if this association does not exist and incrementation means 15 increment a weighting factor associated with this association U1-URL2 in the table of links of the users 299 and each time a computer request containing this association U1-URL2 is received. The weighting factor thus represents the occurrence of the computer requests containing this association U1-URL2.

As before, the table of links of the users 299 is incorporated in a memory containing several registers M1 to M5 adapted to store the name of the user U1, the address of the visited site URL2, the associated weighting factor, the date of creation and the last-access date.

Means 16 of updating this last-access date are also provided as well as elimination means 17 similar to those described in the recording means 7 for a table of site links 6.

The management of such a table of links of users 299 is effected in a similar manner to that of the table of site links 6 and is described in detail in the patent application FR 98 11489.

In addition, and in accordance with the present invention, the user classification device also has means 36 of storing, on the site S2, pointing sites S1, identified by their electronic address URL1, pointing to the site S2, whose address is extracted from the computer requests received by the extraction means 11.

Naturally, when the automatic site and user classification means are used simultaneously on a communication network site, the storage means 36 are then incorporated in the table of site links 6 and correspond to the register M1 in this table 6.

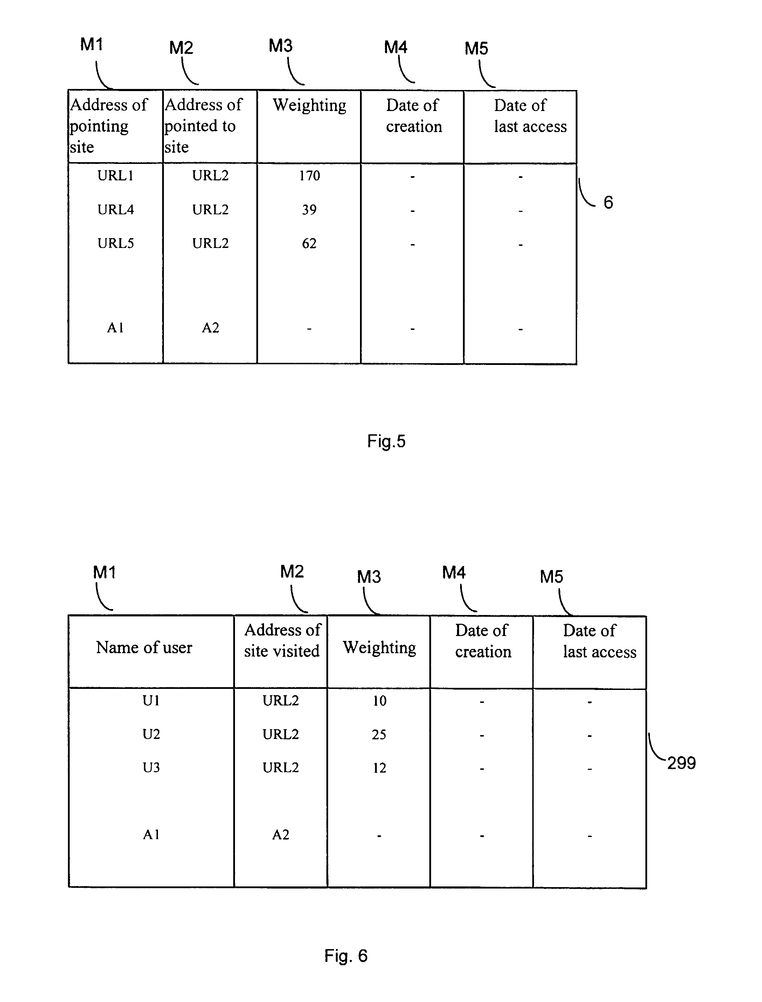

Thus, as illustrated in Figures 5 and 6, two table of links 6 and 299 are obtained. By way of example, the table of site links 6 contains the associations URL1-URL2, URL4-URL2 and URL5-URL2, which correspond to the sites S1, S4 and S5 which point to the site S2 on the graph in Figure 2.

Likewise, the table of links of users 299 contains the associations U1-URL2, U2-URL2 and U3-URL2, which correspond to three users U1, U2 and U3 who have sent requests to the computer server 2, 5 storing the site S2.

In the remainder of the description of the automatic site or user classification devices, the associations of tables of links of the sites 6 or of users 299 will be referred to indifferently as associations A1-A2, A1 representing either the address URL1 of the pointing site S1 in the table of links of sites 6, or the name U1 of a user in the table of links of users 299. A2 represents in both cases the address URL2 of the pointed-to or visited site S2.

The site classification device has, in accordance with the invention, a global table of sites 100 adapted to store associations A1-A2.

Means 30 of receiving global tables of sites of one or more adjacent sites are also provided, the global table of an adjacent site storing at least one association containing said site.

In this example, an adjacent site can be the site S4 or the site S6 provided that the global table stored on these sites includes the site S2 as a pointing site or a pointed-to site of one of the stored associations. The choice of these sites referred to as adjacent sites will be more clearly explained in the subsequent description of a device and a method for transmitting a global table in accordance with the second aspect of the invention.

The automatic site classification device also has means 101 of updating the global table 100 of the site S2 from associations recorded in the table of links of sites 6 and associations stored in a global table Tv of one or more adjacent sites.

In a similar fashion, the device for the automatic classification of the users of a computer network has a global table 300 adapted to store associations A1-A2 of users and sites visited, means 30 of receiving global tables of one or more adjacent sites, an adjacent site storing at least the site S2 as a visited site in the global table 300 or as a pointing site in the storage means 36, which can as described previously be incorporated in the site link table 6.

This user classification device also has means 301 of updating the global table 300 of the site S2 from the associations recorded in the user link table 299 and the associations stored in a global table Tv of one or more adjacent sites.

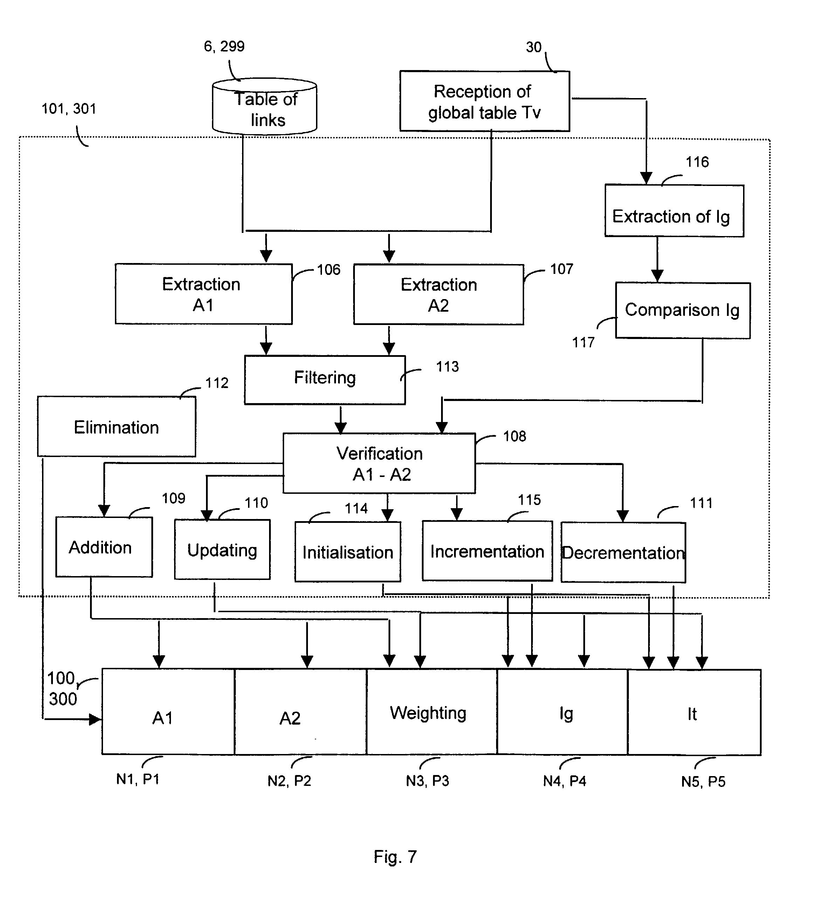

The updating means 101, 301 of the automatic site and user classification devices will now be described with reference to Figure 7. The structure and functioning of these updating means is to a great extent similar to the recording means 7, 35 described above.

They have means 106 and 107 of extracting the members A1 and A2 of each association stored in a site or user table of links 6, 299 or stored in a global table Tv of an adjacent site.

Filtering means 113 are provided for eliminating associations A1-A2.

Verification means 108 are adapted to verify the existence or not of the association A1-A2 in the global table 100, 300 and addition means 109 add this association to the global table 100, 300.

Elimination means 112 are also provided for eliminating associations from the global table 100, 300, notably for limiting the size thereof.

The global table 100, 300 has registers N1, P1 and N2, P2 adapted respectively to store the members of the associations A1 and A2.

The global table 100, 300 stores a set of parameters associated with each association A1-A2, in registers N3, P3, N4, P4 and N5, P5.

This set of parameters comprises at least one weighting factor updated from the weighting factors of the associations recorded in the table of links 6, 299 and the associations stored in a global table Tv of one or more adjacent sites.

Updating means 110 are also provided for this purpose.

Preferably, the set of parameters comprises a generation indicator Ig adapted to date each updating of the parameters associated with each association A1-A2.

The classification device also has, incorporated in the updating means 101, 301, means 116 of extracting this generation indicator Ig from the global table Tv of an adjacent site and means 117 of comparing the generation indicators Ig associated with an identical association A1-A2 of the global table 100, 300 to be updated and the global table Tv of the adjacent site, the updating of the parameters such as the weighting factor, for example, associated with this association A1-A2 being performed only if the generation indicator Ig of the association of the global table Tv of the adjacent site indicates a more recent date than the generation indicator Ig of the association of the global table to be updated 100, 300.

When this generator indicator Ig is a real number, the updating means 101, 301 have means 115 of incrementing the generation indicator Ig at each updating of the parameters associated with the association A1-A2 from one of the associations recorded in the table of links 6, 299 on the site S2.

In accordance with a preferred embodiment of the invention, the set of parameters of an association A1-A2 comprises a transmission indicator It representing the transmission number of this association A1-A2 from one site to another site in the computer network 1.

When the transmission indicator It is a real number, the updating means 101, 301 comprise means 114 of initialising the transmission indicator to a maximum value predetermined at the time of the first storage of the association A1-A2 in the global table 100, 300 and means 111 of decrementing the transmission indicator It at each transmission of the association A1-A2 from one site to another site in the computer network 1.

The role of this transmission indicator will be more clearly understood in relation to the subsequent description of the transmission device and method according to a second aspect of the invention.

The automatic site or user classification device can be incorporated into a microprocessor 500, a read only memory 501 comprising a program for classifying the sites or users of the computer network 1, and a random access memory 502 containing registers adapted to record variables modified during the running of the program.

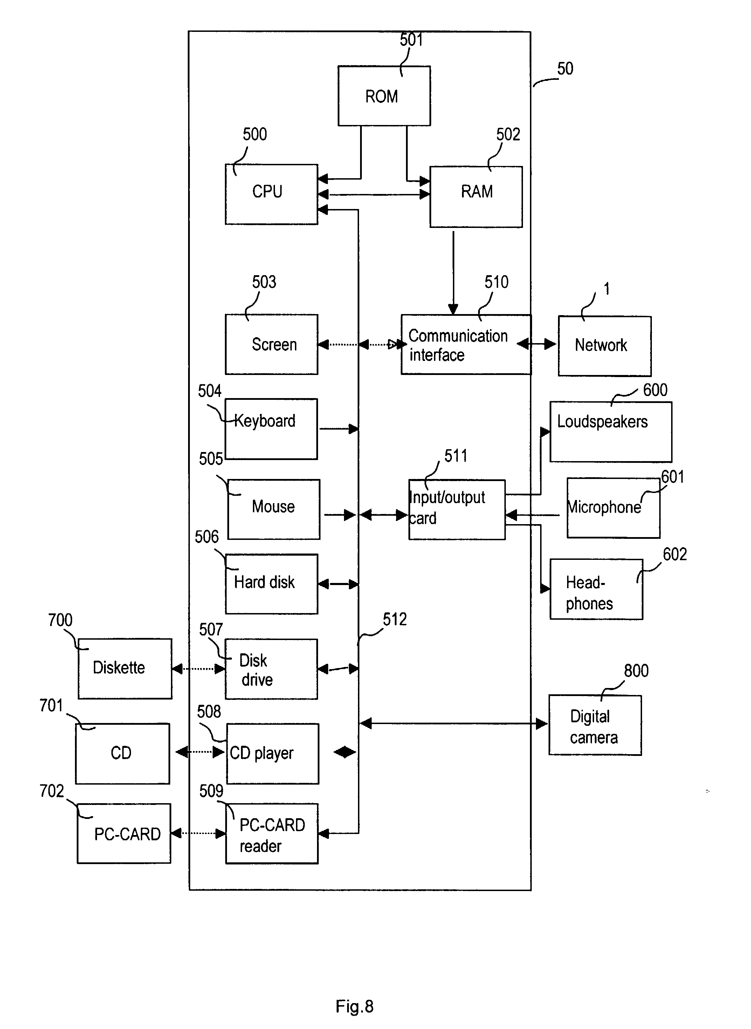

As illustrated in Figure 8, this microprocessor 500 is integrated into a computer 50 which can be connected to different peripherals, for example a digital camera 800 or a microphone 601, headphones 602 or a loudspeaker 600, by means of an input/output card 511, in order to receive and store documents on the site S2.

This computer 50 has a communication interface 510 connected to the communication network 1 in order to receive the computer requests and to respond to these by transferring a document.

The computer 50 also has document storage means, such as a hard disk 506, or is adapted to cooperate, by means of a disk drive 507, a compact disc drive 508 or a computer card reader 509, with removable means of storing documents, with respect to the diskettes 700, compact disks (CD) 701 or PC cards 702.

These fixed or removable storage means can also contain the code of the classification method according to the invention, which, once read by the microprocessor 500, will be stored in the hard disk 506.

As a variant, the program enabling the classification device to implement the invention can be stored in the read only memory (ROM) 501.

As a second variant, the program can be received in order to be stored as described previously by means of the communication network 1.

The computer 50 also has a screen 503 making it possible for example to serve as an interface with an operator who can consult the table of links of the sites 9 or users 299 or the global tables 100, 300 by means of the keyboard 504 or mouse 505 or any other means.

The central unit (CPU) 500 will execute the instructions relating to the implementation of the invention. On powering up, the programs and methods relating to the invention stored in a non-volatile memory, for example the read only memory 501, are transferred into the random access memory (RAM) 502, which will then contain the executable code of the invention as well as the variables necessary for implementing the invention.

The communication bus 512 affords communication between the different sub-elements of the computer 50 or connected to it. The representation of the bus 512 is not limitative and notably the microprocessor 500 is able to communicate instructions to any sub-element directly or by means of another sub-element.

The classification device can be incorporated in a microprocessor different from the one in which the computer server proper 2 is incorporated with all the stored documents 3.

It can thus be added between a computer server 2 and the communication network 1, as are added, in a conventional fashion, the proxy servers in the communication networks.

Alternatively, the classification device can be incorporated directly in the microprocessor incorporating the computer server 2.

A description will now be given of the classification method according to the invention for the automatic classification of sites.

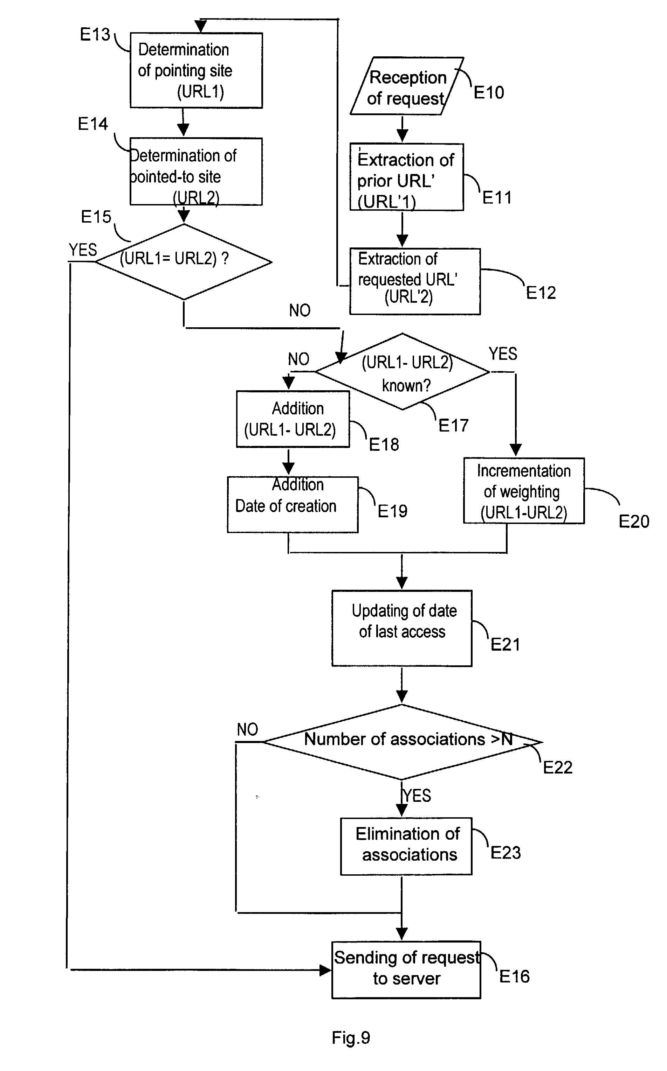

As illustrated in Figure 9, this method for the automatic classification of sites in a computer network includes first of all a step E10 of receiving a computer request on the pointed-to site S2, requesting a document D2 from the site S2 via a pointer included in a document D1 on the site S1. Since the transmission of this document to the user does not directly form the object of the present invention, it will not be described any further here.

The classification method next includes a step of recording on the site S2 associations of the site S2 and pointing sites, such as S1, S4 or S5 pointing to the site S2.

In practice, as illustrated in Figure 9, the following are successively carried out:
- the extraction E11 from the computer request of the address URL'1 of the prior document D1;
- the extraction E12 from the computer request of the address URL'2 of the requested document D2;
- the determination E13 and E14 of the addresses URL1 and URL2 of the pointing site S1 and pointed-to site S2 whilst truncating the complete addresses URL'1 and URL'2;
- the verification of the similarity or not of the addresses of the sites URL1 and URL2.

If the two addresses are identical, that is to say the documents D1 and D2 are on the same site, the recording step is interrupted and the request is sent to the computer server 2 in a conventional fashion in a sending step E16.

Otherwise, it is verified, in a test step E17, whether the association URL1-URL2 is known in the table of links of sites 6.

In the negative, this association is added at step E18 to the table of links 6 and the associated date of creation is added in a step E19.

In the affirmative, the weighting factor associated with this association URL1-URL2 is incremented in the table of links of sites 6 during an incrementation step E20.

The date of last access is also updated in a step E21.

It is next tested whether the number of associations stored in the table of links 6 is greater than a threshold value N in a test E22, and in the affirmative an elimination step E23 is implemented in order to eliminate one or more associations. This elimination of associations is described in detail in the patent application FR 98 11489, the content of which is incorporated by reference in the present description.

There is then obtained a table of links of the sites 6 as illustrated non-limitatively in Figure 5.

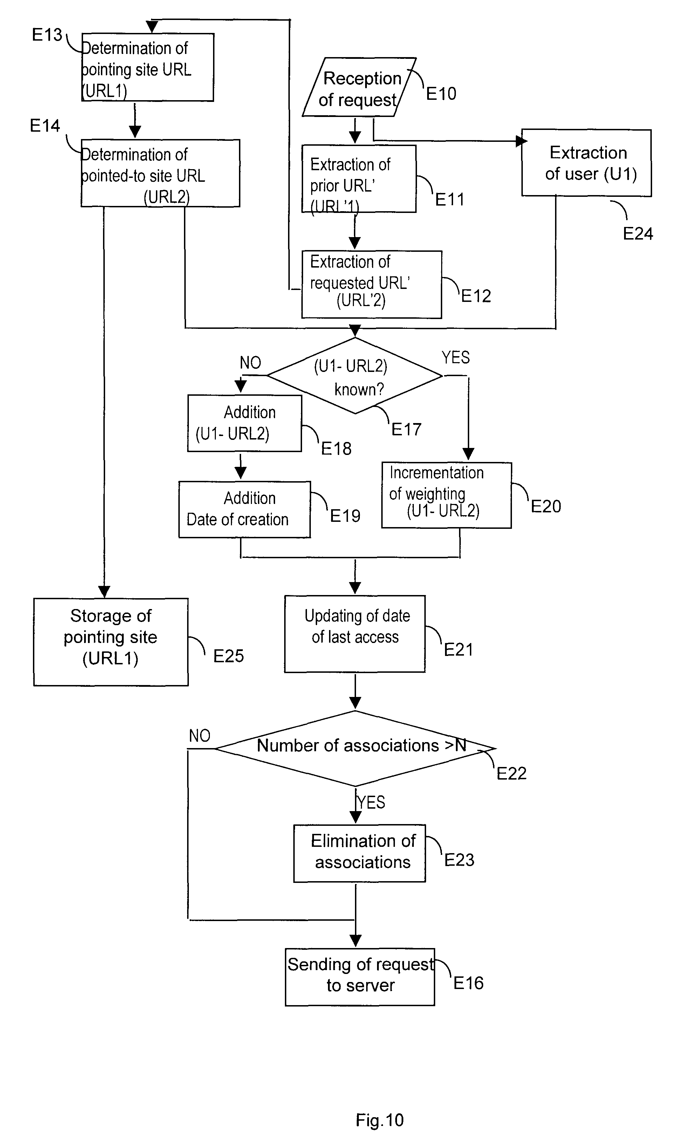

In a similar fashion, the user classification method comprises a step of recording, on the site 2, associations of users visiting this site S2 as illustrated in Figure 10.

The following are carried out in succession:
- the extraction E11 from the computer request of the address URL'1 of the prior document D1;
- the extraction E12 from the computer request of the address URL'2 of the requested document D2;
- the determination E13 and E14 of the addresses URL1 and URL2 of the pointing site S1 and pointed-to site S2 whilst truncating the complete addresses URL'1 and URL'2.

In a storage step E25, the pointing site S1 is next stored, identified by its address URL1 on the communication network 1.

At the same time, a step E24 of extracting the name U1 of the user who sent the computer request is implemented.

It is verified, in a test step E17, whether the association U1-URL2 is known in the table of links of users 299.

The following steps of addition E18, E19, incrementation E20, updating E21, testing E22 and eliminating E23 are similar in every respect to those described previously for the recording of the associations of sites.

There is then obtained a table of links of users 299 as illustrated non-limitatively in Figure 6.

The automatic site or user classification methods also include a step of storing, in a global table 100, 300, respectively associations of pointing sites and pointed-to sites or associations of users and visited sites.

In the remainder of the description of these methods, the associations A1-A2 represent indifferently the associations of a table of links of sites 6 or a table of links of users 299.

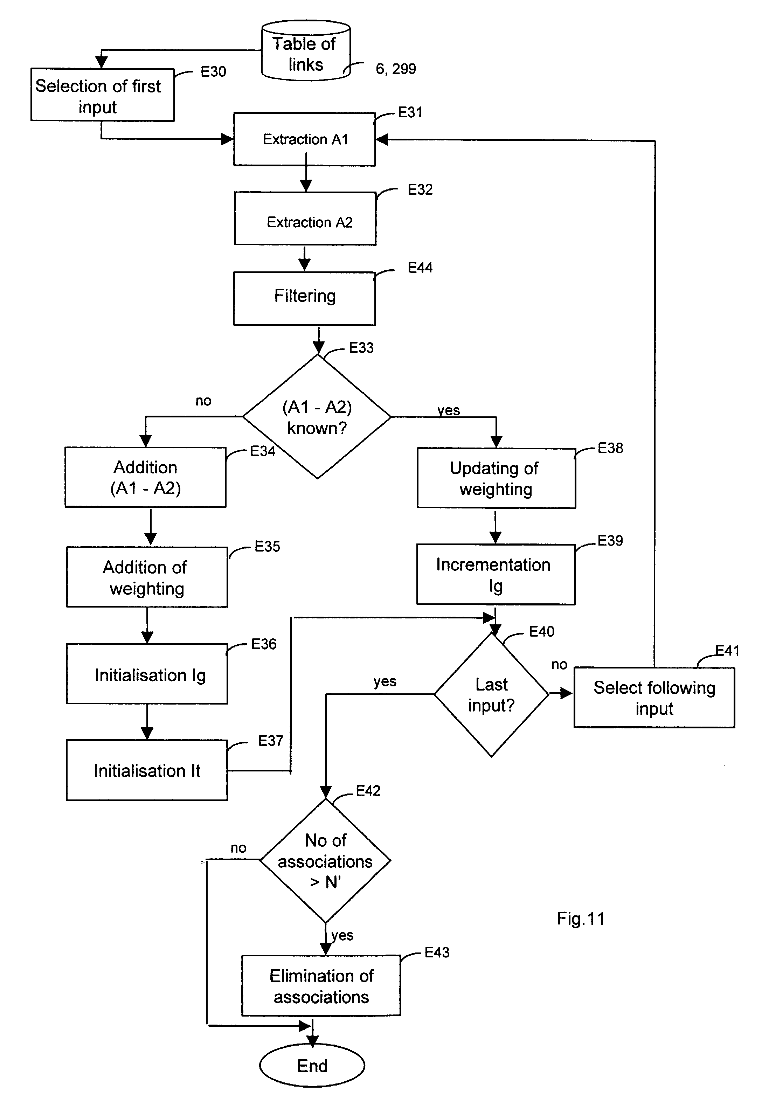

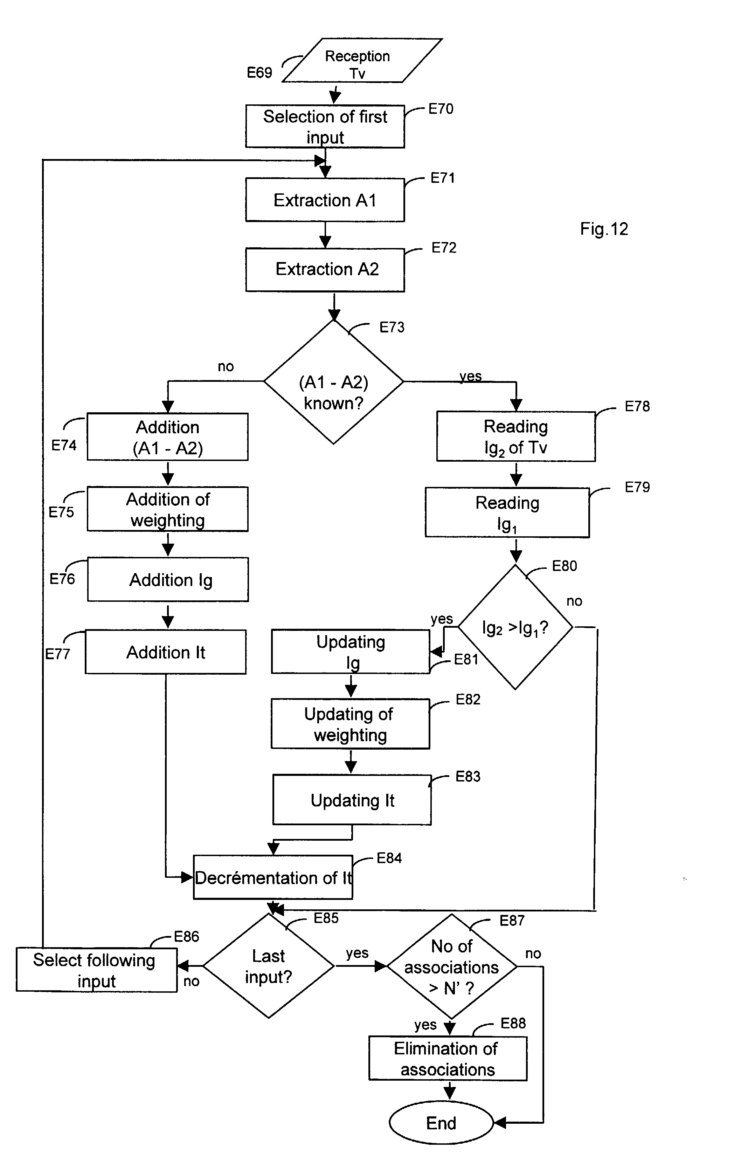

As illustrated in Figures 11 and 12, the classification method comprises a step of updating the global table 100, 300 of a site S2 from associations A1-A2 recorded in a table of links 6, 299 (Figure 11) and associations A1-A2 stored in a global table Tv of adjacent sites (Figure 12).

As illustrated in Figure 11, in a step E30 a first entry in the table of links 6, 299 is considered, that is to say a first association A1-A2 and its associated parameters.

In extraction steps E31 and E32, the members of the association A1 and A2 are extracted and if necessary the results are filtered by eliminating for example the associations with a low weighting factor. This precaution avoids overloading the global table with unrepresentative associations.

Next, in a test step E33, it is verified whether the association A1-A2 is known in the global table 100, 300 to be updated.

In the negative, this association A1-A2 is added to the global table 100, 300 (step E34).

Preferably, each association A1-A2 in the global table 100, 300 being associated with a set of parameters comprising, as described previously, a weighting factor, a generation indicator Ig and a transmission indicator It, the weighting factor is updated in an updating step E35 from the weighting factor of the association recorded in the table of links 6, 299.

In this updating step E35, the weighting factor of the table of links 6, 299 is copied into the global table 100, 300.

Initialisation steps E36 and E37 also initialise the generation indicator Ig, to a real value equal to 1 for example, and the transmission indicator It, to a real value M which corresponds to the maximum distance on the communication network 1 at which the association A1-A2 can be transmitted to another site from the site S2 on which this association is stored from the first time in the global table 100, 300. In practice, M can be chosen so as to be equal to 10 so that the association A1-A2 will be transmitted at a maximum at a distance of 10 nodes from the site S2 over the communication network 1.

If the association A1-A2 is already stored in the global table 100, 300, the associated weighting factor is simply updated in an updating step E38 by copying the one stored in the table of links 6, 299, and the generation indicator Ig is incremented by one unit in order to date the last updating of the parameters associated with the association A1-A2.

In a step E40 it is verified whether all the entries in the table of links 6, 299 have been selected and in the negative the following entry is selected in step E41 and the storage and updating steps E31 to E40 are reiterated for the other associations of the table of links.

The automatic site or user classification method can also include a step E42 for comparing the number of associations stored in the global table 100, 300 with a threshold value N' and an elimination step E43 for eliminating certain associations, for example of low weighting, in order to limit the size of the global table 100, 300.

As illustrated in Figure 12, and in accordance with the invention, the storage and updating of the global table 100, 300 are also implemented using the association A1-A2 stored in the global table Tv of an adjacent site.

In a reception step E69, the global table Tv of an adjacent site is received and in a step E70 a first entry in the global table Tv is considered, that is to say a first association A1-A2 and its associated parameters.

In extraction steps E71 and E72, the members of the association A1 and A2 are extracted.

Next, in a test step E73, it is verified whether the association A1-A2 is known in the global table 100, 300 to be updated.

In the negative, this association A1-A2 is added to the global table 100, 300 (step E74).

The weighting factor is updated in an updating step E75 using the weighting factor of the association recorded in the global table 100, 300, by copying it.

The generation indicator Ig and the transmission indicator It of the global table Tv are also copied in the updated global table 100, 300.

If the association A1-A2 is already stored in the global table 100, 300, there are read, in two reading steps E78 and E79, the generation indicators Ig₁ and Ig₂ associated respectively with the association A1-A2 stored in the global table to be updated and in the global table Tv of an adjacent site.

The classification method then includes a step E80 of comparing the generation indicators Ig₁, Ig₂, the updating of the parameters associated with the association A1-A2 being effected only if the generation indicator Ig₂ of the association of the global table Tv of the adjacent site indicates a more recent date than the generation indicator Ig₁ of the association of the global table to be updated 100, 300.

In this example where the generation indicator Ig of an association is a real number incremented at each updating of the associated parameters from an association recorded in a table of links 6, 299, the steps E81, E82 and E83 of updating the parameters associated with the association A1-A2 are performed only if the generation indicator Ig₂ of the association of the global table Tv of the adjacent site is greater than the generation indicator Ig₁ of the association of the global table to be updated 100, 300.

The replacement of the stored data with less recent data is thus avoided. Referring to Figure 2, such a case could occur when the global table of the pointing site S1 is transmitted to the pointed-to site S2 both directly and also via the intermediate site S4, or even via the intermediate sites S3 and then S4. The global table then transmitted by S4 to the pointed-to site S2 contains parameters less recent than the parameters which were previously stored and updated in the global table 100, 300 of the site S2 from the global table Tv of the site S1.

The updating of the steps E81, E82 and E83 consists of copying the parameters from the global table Tv into the global table to be updated 100, 300.

The classification method next includes a step of decrementing the transmission indicator It. This indicator It makes it possible to avoid the associations of a global table being transmitted in an unlimited fashion in the communication network.

In a step E85 it is verified whether all the entries in the global table Tv have been selected and, in the negative, the following entry is selected in step E86 and the storage and updating steps E71 to E85 are reiterated for the other associations of the global table Tv.

As before, a comparison step E87 compares the number of associations stored in the global table 100, 300 with a threshold value N', and an elimination step E88 is provided for eliminating certain associations, for example of low weight, in order to limit the size of the global table 100, 300.

The updatings of the global table 100, 300 of a site S2 from the table of links 6, 299 stored on this site S2 and the global tables Tv of the adjacent sites can be effected periodically or when the number of changes has exceeded a certain threshold.

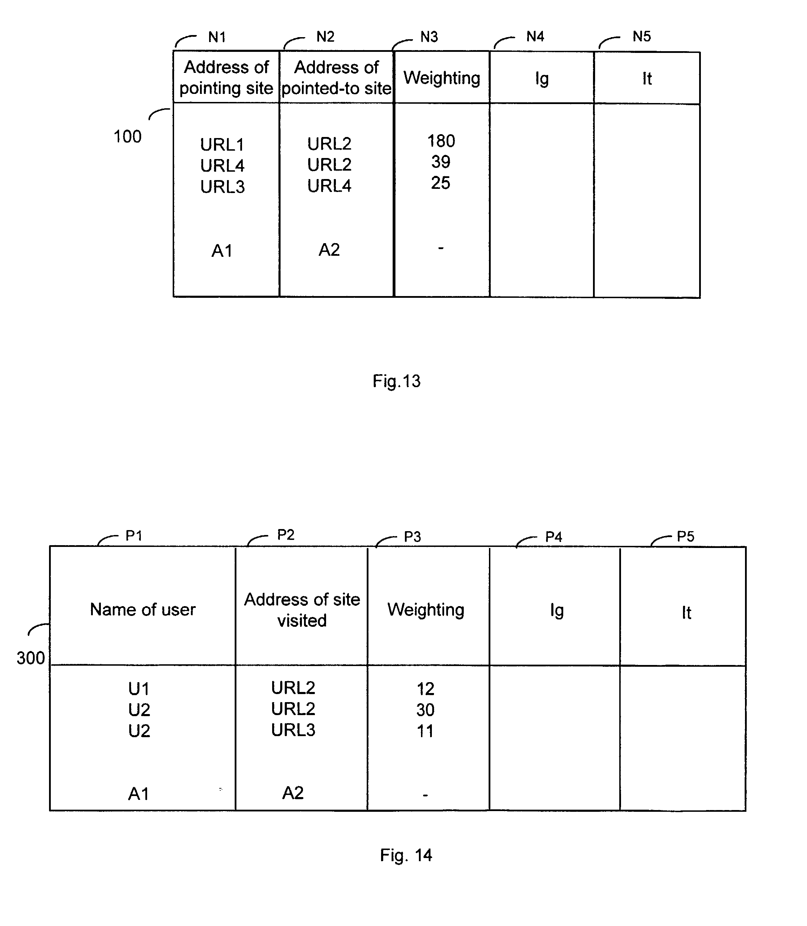

Global tables which reflect the behaviour of the users on the communication network 1 are then obtained, as illustrated in Figures 13 and 14. By virtue of the updatings effected not only from the tables of links 6, 299 but also from the global tables Tv of the adjacent sites, each global table 100, 300 has multiple associations, not limited to the associations derived solely from the computer requests received by the site S2 on which the global table is stored.

A description will now be given of a second aspect of the invention concerning the transmission of the global tables 100, 300 from one site to an adjacent site in the communication network 1 and making it possible to update the global tables as explained above.

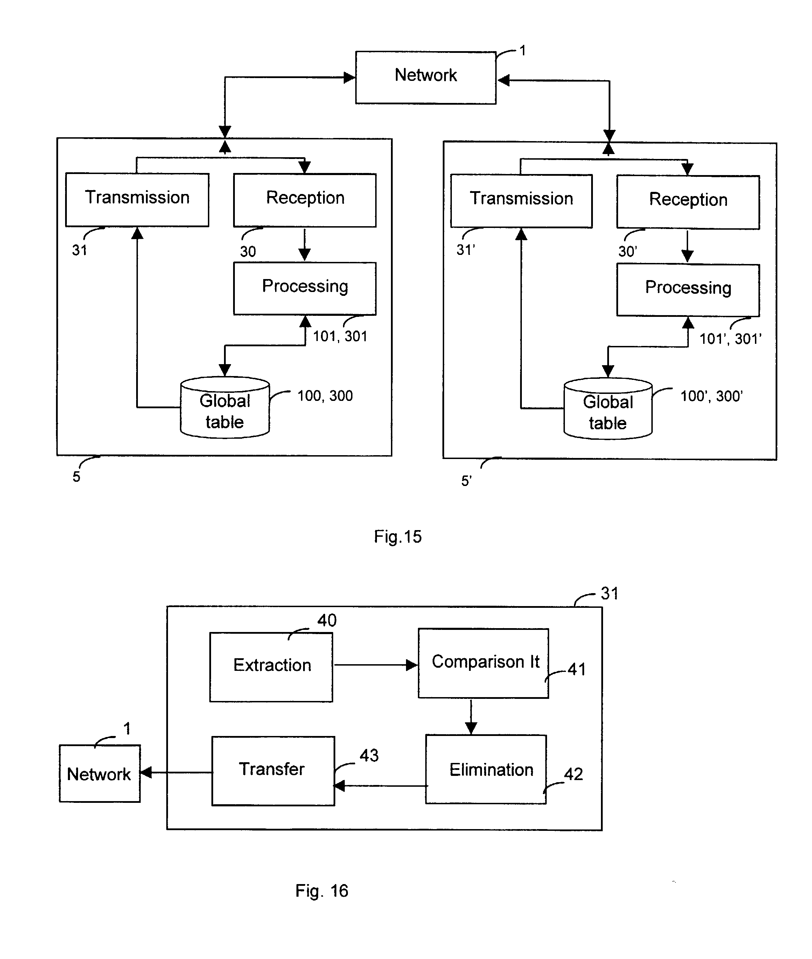

With reference to Figure 15, two computer servers 5, 5' of the communication network 1 have been depicted in general terms, each having global tables of sites and/or users 100, 300 and 100', 300'. Each computer server 5, 5' has a device 31, 31' for transmitting a global table 100, 300, 100', 300' and means 30, 30' of receiving such a global table.

To give an idea, and non-limitatively, a description will be given of the transmission device 31 of the computer server 5, the transmission device 31' being identical in all respects.

As illustrated in Figure 16, the transmission device 31 according to the invention has:
- means 40 of extracting the addresses of the sites stored on the site S2. As explained in detail below, the sites are stored in the global table 100, 300 and possibly in a storage means for the pointing sites 36;
- means 41 of comparing the transmission indicator It associated with each association of the global table 100, 300 with a predetermined number of transmissions;
- means 42 of eliminating from the global table 100, 300 one or more associations A1-A2 when the transmission indicator It associated with these associations indicates that a predetermined number of transmissions have been performed; and
- means 43 of transferring the global table 100, 300 to the stored sites via the communication network 1.

In the example embodiment described here, the comparison means 41 are adapted to compare the transmission indicator It associated with each association with zero and the elimination means 42 are adapted to eliminate from the global table 100, 300 one or more associations when the transmission indicator It associated with each of these associations is equal to zero.

This transmission device can be incorporated into a microprocessor 500 as depicted in Figure 8, a read only memory 501 comprising a program for transmitting the global table 100, 300 to the sites of the computer network 1, and a random access memory 502 containing registers adapted to record variables modified during the running of the program.

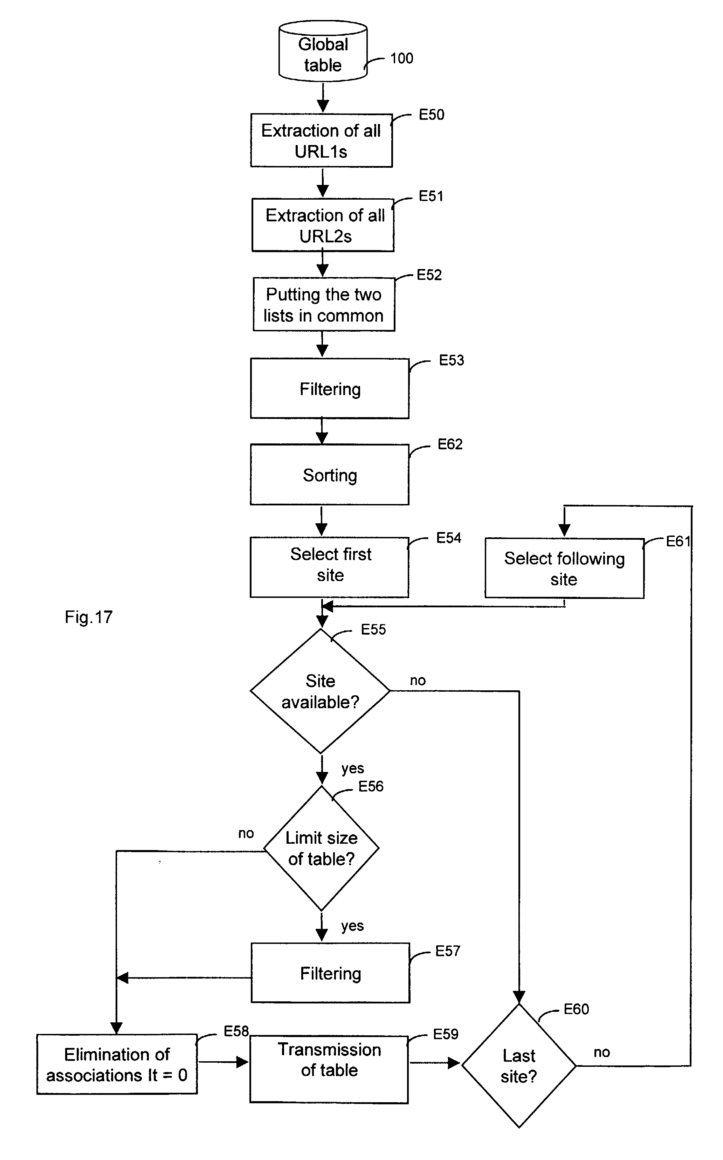

A description will now be given, with reference to Figure 17, of the transmission of a global table of sites 100 from a site S2 to the adjacent sites of a communication network 1. This transmission method includes the following steps:
- extraction E50, E51 of the addresses of the sites stored in the global table 100 of the site S2. In this way the addresses URL1 of the pointing sites and the addresses URL2 of the pointed-to sites are extracted.

The two lists are merged in a step E52 of putting in common and the list obtained is possibly filtered in a filtering step E53, the said list being truncated if it exceeds, for example, a predetermined number of sites.

A sorting step E62 also eliminates duplicates from this list, one and the same site being able to be recorded both as a pointing site and a pointed-to site in the global table 100.

Next, in a step E54 a first site is selected from the list and it is verified whether this site is available (step E55) on the communication network, that is to say whether it can receive the global table 100.

In the negative, it is tested whether sites remain in the list and in the affirmative the following site is selected at the selection step E61.

If not, a test step E56 verifies whether the size of the global table 100 to be transmitted must be limited, compared with a predetermined threshold value which can be common to all the servers in the communication network. If so, in a filtering step E57, the global table 100 is filtered, eliminating one or more associations with a low weighting factor, for example.

The transmission method then includes a step E58 of eliminating associations from the global table 100 when the transmission indicator It associated with these associations is equal to zero.

The global table 100 is then transmitted to the selected site.

In a test step E60, it is verified whether sites remain in the list and steps E55 to E60 are reiterated for the following sites.

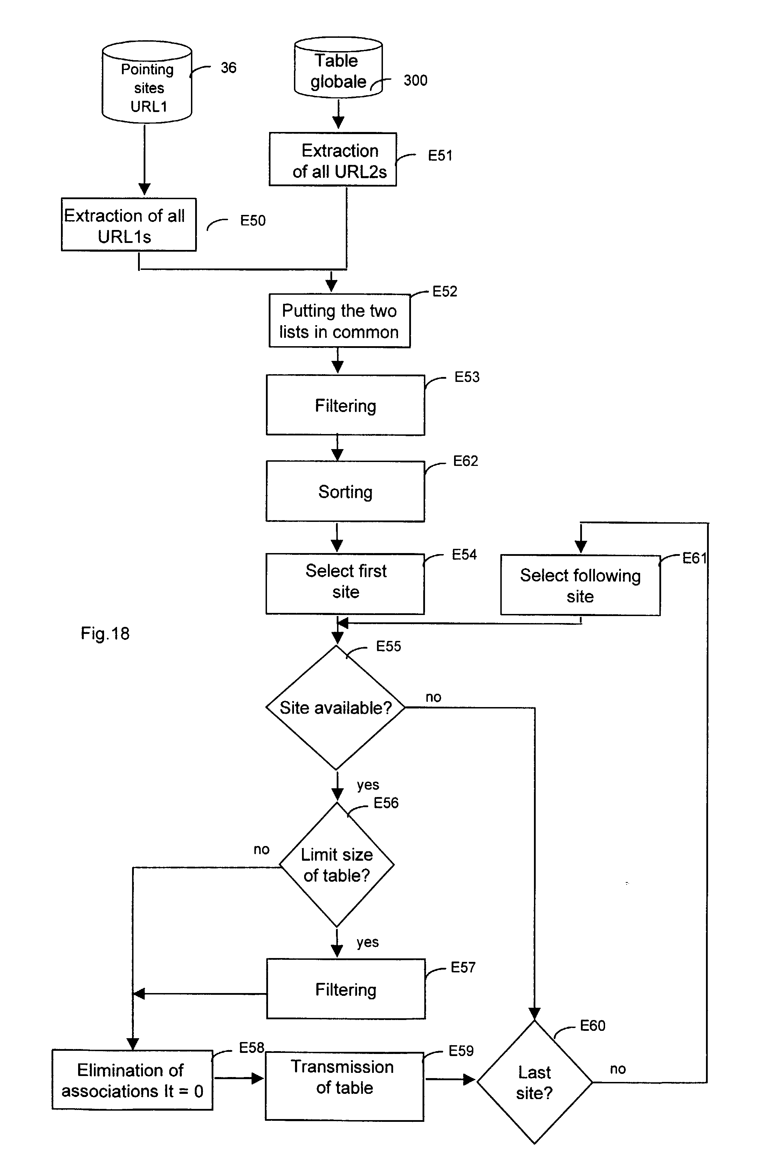

The method of transmitting a global table of users 300 is illustrated in Figure 18 and is almost identical to that described previously except for the first steps, which will be explained below:

An extraction step E51 extracts, from the global table, all the addresses URL2 of the visited sites stored. At the same time, in an extraction step E50, the addresses URL1 of the pointing sites stored in the storage means 36 are extracted. A step E52 of putting in common merges the lists and the following steps E53 to E62 are identical to those described for the method of transmitting a global table of sites 100.

Naturally, when the computer server uses both the method of automatic classification of sites and the method of automatic classification of users, the transmission of the global table of users 300 to the adjacent sites can be implemented using the sites stored in the global table of sites 100, on the basis of the transmission method as described with reference to Figure 17.

A description will now be given, in accordance with a third aspect of the invention, of a device and method for constituting a group of sites from a global table of sites 100.

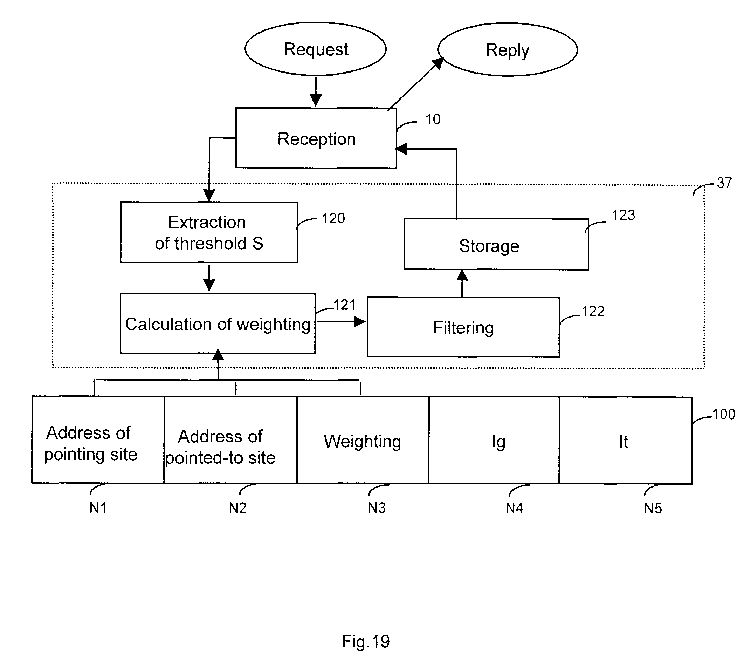

As illustrated in Figure 19, this device for constituting a group of sites 37 has means 121 of calculating, for each site stored in the global table 100, both as a pointing site and as a pointed-to site, an associated weight. This weight is equal to the average of the weighting factors associated with the associations of the global table 100 comprising the site as a pointing site or pointed-to site.

Thus, taking as an example the global table 100 illustrated in Figure 13, the weighting factor of the site S4, with the electronic address URL4, is equal to the average of the weighting factor 39 of the association URL4-URL2 and of the weighting factor 25 of the association URL3-URL4, that is to say equal to 32.

The constitution device 37 also has means 123 of storing sites and their associated weights.

Preferably, it also has means 120 of extracting a threshold S, this threshold corresponding for example to the maximum number of sites to be supplied in the group of sites. When the constitution of the group of sites is implemented on reception of a computer request, this threshold S can be indicated in the computer request.

Filtering means 122 are then adapted to eliminate the sites with the lowest weighting factors so that a number of sites below the threshold S is stored.

This device for constituting a group of sites 37 can be incorporated in a microprocessor 500, as illustrated in Figure 8, a read only memory 501 comprising a program for constituting a group of sites of the computer network, and a random access memory 501 containing registers adapted to record variables modified during the running of the program.

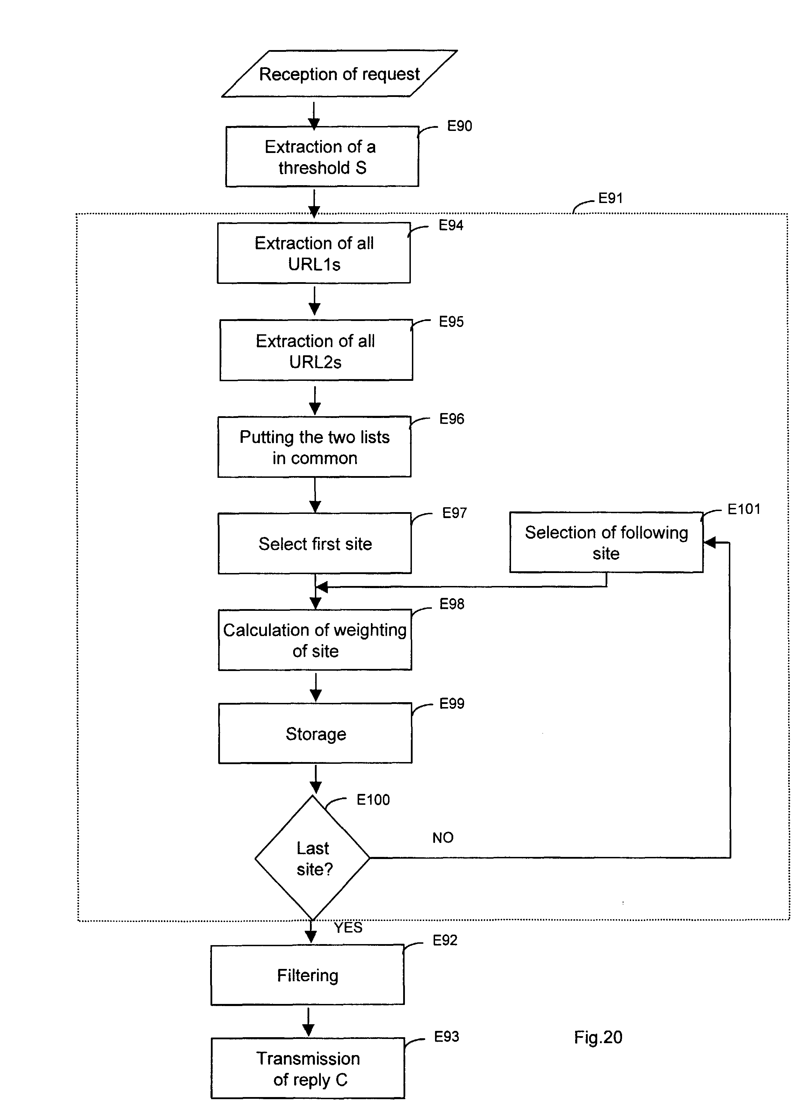

As illustrated in Figure 20, the method of constituting a group of sites from a global table of sites 100 comprises the following steps:

On reception of a computer request by the reception means 10 of the site S2, requiring the constitution of a group of sites C pointing directly or indirectly to this site S2, an extraction step E90 extracts a threshold S corresponding to the maximum number of sites to be included in the group C in response.

In a step E91, there is calculated, for each site stored in the global table 100, the associated weight as described above, and the sites and their associated weights are stored.

For this purpose, extraction steps E94 and E95 are implemented in order to extract all the electronic addresses URL1 and URL2 of the pointing sites and pointed-to sites stored in the global table 100.

The addresses obtained are next merged in a step of putting the list E96 in common.

A first site is selected (step E97) and the weight of the site is calculated in a calculation step E98.

The electronic address and the weight of the site are then stored in memory in a storage step E99.

In a step E100, it is tested whether unprocessed sites remain in the list and, in the affirmative, the following site is considered at step E101 and steps E98 to E100 are reiterated.

When all the sites have been processed, a filtering step E92 eliminates the sites with the lowest weight and only the S sites with the highest weights are kept.

It should be noted that the site S2, to which the sites in the group C thus constituted point, can possibly not form part of this group if its associated weight is too low.

The response is then sent, during a transmission step E93, to the user 4 or to the computer server of the network which sent the request.

It is thus possible, by virtue of the invention, to constitute, in a decentralised manner, groups of sites pointing to each other by means of documents stored in these sites, and therefore dealing a priori with the same information.

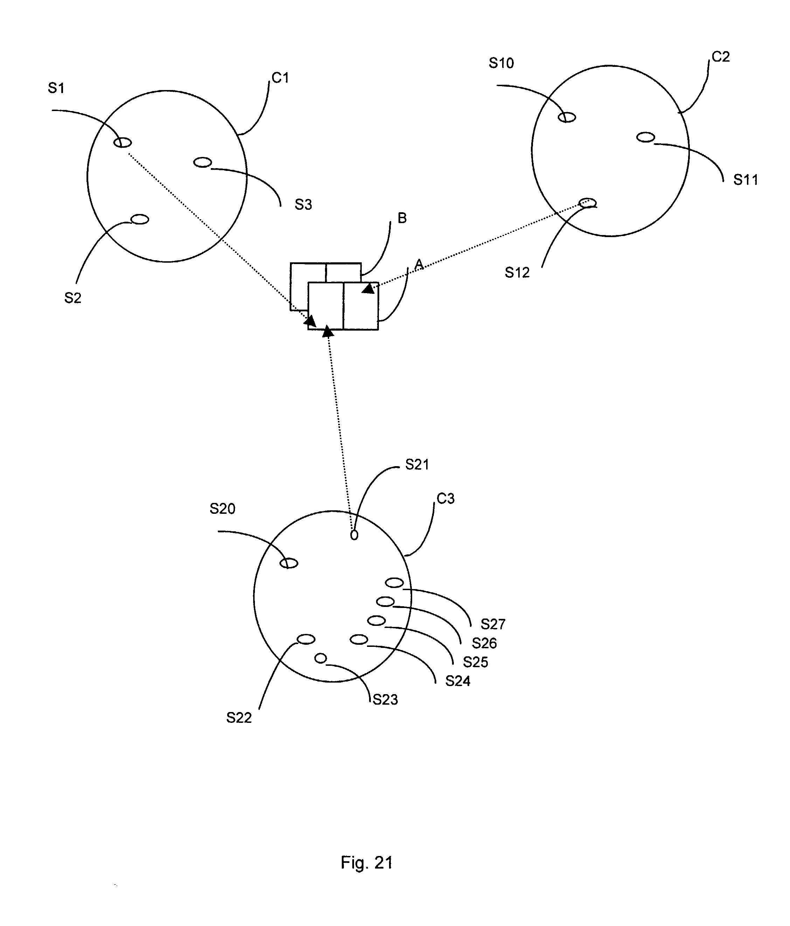

An example of groups of sites C1, C2 and C3 is illustrated in Figure 21.

The groups thus constituted can be listed in an electronic directory A, B (for example a computer server).

If in the table of links of sites 6 there are also recorded key words in relation to the pointing or pointed-to documents, these key words can also be listed in the directory and can, in a conventional fashion, enable a search engine to find the list of sites of a group dealing with a particular subject.

A description will finally be given of a device and method for constituting a group of users from a global table of users 300 in accordance with a fourth aspect of the invention.

This application of the global table of users 300 makes it possible to construct a group of users using a group of sites C as constituted previously.

It is thus possible to group together users interested a priori in the same sites of the communication network 1 and to give these users the possibility of getting in contact with each other by the conventional communication means of the network.

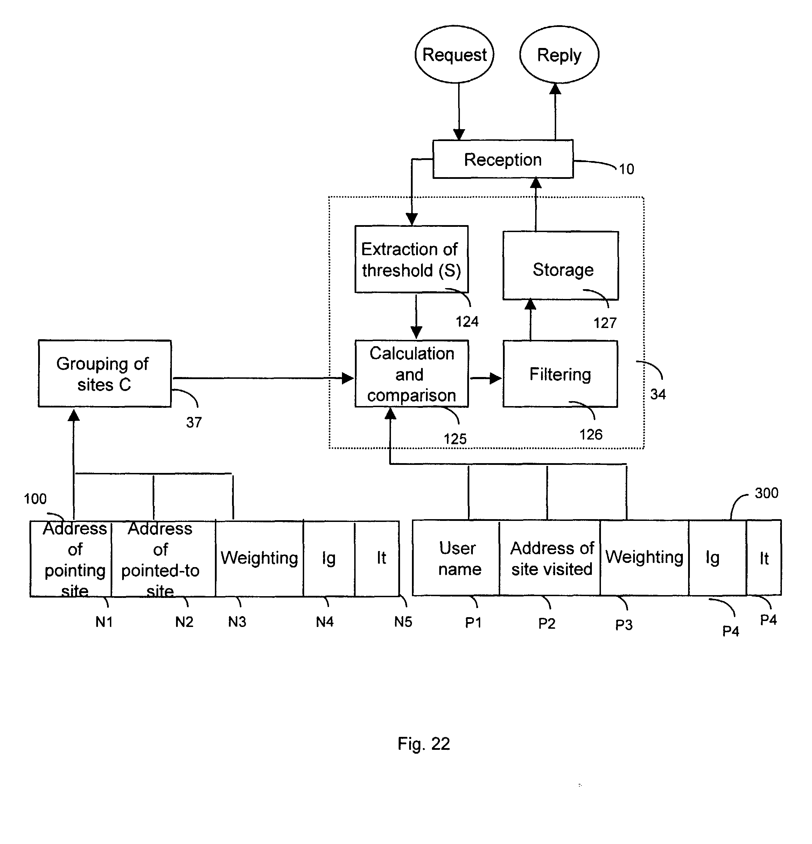

As illustrated in Figure 22, the device for constituting a group of users 34 comprises:
- means 125 of calculating, for each user Ui stored in the global table 300, an associated weight equal to the average of the weighting factors associated with the associations comprising this user.

Thus, with reference for example to the global table 300 illustrated in Figure 14, the weight associated with the user U2 is equal to the average of the weighting factor 30 of the association U2-URL2 and of the weighting factor 11 of the association U2-URL3, that is to say is equal to 20.5.
- means 125 of comparing the associated weights with a predetermined threshold value;
- means 125 of eliminating users having an associated weight less than this predetermined threshold value.

Thus there are eliminated from the group of users those which have little visited the sites recorded in the global table 300.
- means 125 of extracting, from the global table 300, the list of sites Suᵢ visited by each user Ui;

Thus, for the user U2 in Figure 14, the set Su₂ comprises the sites S2 with the address URL2 and S3 with the address URL3.
- means 125 of calculating, for each user, the sites Cuᵢ common to the group of sites and to the list of sites visited;
- means 125 of calculating, for each user Ui, the number of sites Cuᵢ common to the group of sites C and to the list of sites visited Suᵢ;
- means 125 of calculating the number of sites stored in a group of sites C;
- means 125 of comparing the number of common sites Cuᵢ and the number of sites stored in C; and
- means 127 of storing the user Ui in a user group R when the number of common sites Cuᵢ is greater than a predetermined proportion of the number of sites stored in the group of sites C. This proportion can for example be 20%.

Preferably, this device for constituting a group of users 34 comprises filtering means 126 adapted to eliminate the stored users Ui with the lowest weighting factors so that a predetermined number S of users is stored in a group of users R.

Means 124 of extracting a threshold S are provided for extracting, from the computer request requiring the constitution of the group of users R, the maximum number S of user names to be included in the response.

As before, this device for constituting a group of users 34 can be incorporated in a microprocessor 500 as illustrated in Figure 8, a read only memory 501 comprising a program for constituting a group of users R using a group of sites C in the computer network 1, and a random access memory 501 containing registers adapted to record variables modified during the running of the program.

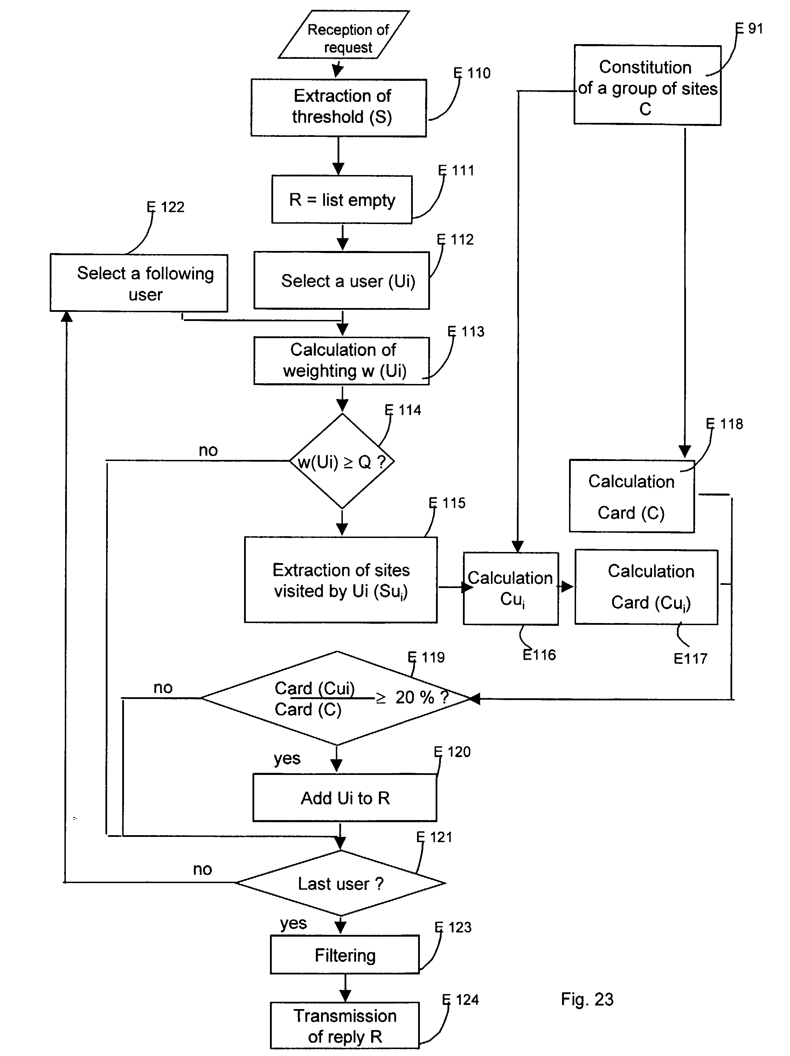

An example embodiment of the method of constituting a group of users R from a global table of users 300, the group of users R using a group of sites C, is illustrated in Figure 23.

It includes the following steps:
- extraction E110, as from the reception of a computer request, of a maximum threshold S of users to be included in the group of users R in response.

The constitution of the group R is initiated at a step E111 and a first user Ui is selected from the global table 300 during a selection step E112;
- calculation, in a step E113 for the user Ui, of an associated weight w(Ui), equal to the average of the weighting factors associated with the associations comprising this user Ui.

This weight w(Ui) is next compared with a predetermined threshold value Q and, in the step E114, the user Ui is eliminated if this has an associated weight w(Ui) less than the predetermined threshold value Q;
- extraction, at the extraction step E115, from the global table of users 300 of the list Suᵢ of sites visited by the user Ui;
- calculation (step E116) for each user Ui of the sites Cuᵢ common to the group of sites C and to the list of visited sites Suᵢ. For this purpose the intersection of the group of sites C and list of sites visited Suᵢ is effected;
- calculation (step E117) for the user Ui of the number Card (Cuᵢ) of sites Cuᵢ common to the group of sites C and to the list of visited sites Suᵢ;
- calculation, in a calculation (step E118) of the number Card (C) of sites stored in the group of sites C;
- comparison, in a step E119, of the number of common sites Card (Cuᵢ) and the number Card (C) of sites stored in the group of sites; and
- storage, in an addition step E120, of this user Ui in the user group R when the number Card (Cuᵢ) of common sites is greater than a predetermined fraction of the number Card (C) of sites stored in a group of sites C.

Here, at the storage step E120, the user Ui is stored in the group of users R when the number Card (Cuᵢ) of common sites is greater than one fifth of the number Card (C) of sites stored in the group of sites C.

It is next verified, in a step E121, whether all the users Ui of the global table 300 have been examined and, in the negative, the following user is selected in a step E122 and steps E114 to E121 of the method are reiterated in order to construct the group of users R.

The method of constituting a group of users R also comprises a filtering step E123 in which the stored users Ui with the lowest weighting factors are eliminated from the group R so that a predetermined number of users, less than or equal to the threshold S, is stored in the group of users R.

The response containing the group of users R, the users being identified by their name, or their electronic address, is next transmitted to the user or to the computer server which made the request.

Thus, by virtue of the invention, the sites and users of a communication network can be classified automatically, directly using the computer requests sent by the users of the communication network.

Naturally, many modifications can be made to the example embodiment described above without departing from the scope of the invention.

Thus some or all of the computer servers of the communication network 1 could have for example only the devices for classification of sites, transmission and constitution of groups of sites.

Moreover, the device for constituting a group of sites or users could possibly not be incorporated in all the computer servers of the communication network.

## Claims

1. Method for the automatic classification of sites in a computer network (1), characterised in that it includes the following steps:
- the recording (E10-E21) on each site (S2) of associations (URL1-URL2) of said site (S2) and pointing sites (S1) pointing to said site (S2), from the reception of computer requests sent by users (4) of the computer network (1);
- the storage (E30-E34, E70-E74) in a global table (100) of associations of pointing sites and pointed-to sites (URL1-URL2); and
- the updating (E33-E39, E73-E77, E81-E84) of the said global table (100) of a site (S2) from associations recorded and associations stored in a global table (Tv) of one or more adjacent sites, the global table (Tv) of an adjacent site storing at least one association containing said site (S2).

2. Method for the automatic classification of users of a computer network (1), characterised in that it includes the following steps:
- the recording (E10-E18, E24) on each site (S2) of associations (U1-URL2) of said visited site (S2) and users (U1), from the reception of computer requests sent by said users;
- the storage (E30-E34, E70-E74) in a global table (300) of associations of users and visited sites (U1, URL2);
- the storage (E25) on each site (S2) of the pointing sites (S1) pointing to said site (S2) from the reception of computer requests sent by said users; and
- the updating (E33-E39, E73-E77, E81-E84) of said global table (300) of a site (S2) from associations recorded and associations stored in a global table (Tv) of one or more adjacent sites, an adjacent site storing at least said site (S2) as a visited site in the global table (Tv) or as a pointing site.

3. Method for the automatic classification of sites or users in accordance with one of Claims 1 or 2, characterised in that, with each recording of associations there is associated a weighting factor representing the occurrence of computer requests comprising said association, each association of the global table (100, 300) being associated with a set of parameters comprising at least one weighting factor updated from the weighting factors of the associations recorded and associations stored in a global table (Tv) of one or more adjacent sites.

4. Classification method according to Claim 3, characterised in that said set of parameters comprises a generation indicator (Ig) adapted to date each updating of the parameters associated with each association, the classification method also including a step (E78-E80) of comparing the generation indicators (Ig₁, lg₂) associated with an identical association of the global table to be updated (100, 300) and the global table (Tv) of the adjacent sites, the updating (E81-E84) of the parameters associated with said association being effected only if the generation indicator (Ig₂) for the association of the global table (Tv) of the adjacent sites indicates a more recent date than the generation indicator (Ig₁) for the association of the global table to be updated (100, 300).

5. Classification method according to Claim 4, characterised in that the generation indicator (Ig) of an association is a real number incremented at each updating of the parameters associated with said association from one of said associations recorded on said site (S2).

6. Classification method according to one of Claims 3 to 5, characterised in that the set of parameters of an association comprises a transmission indicator (It) representing the transmission number of said association from one site to another site in the computer network (1).

7. Classification method according to Claim 6, characterised in that the transmission indicator (It) is a real number initialised to a predetermined maximum value (m) at the time of the first storage of said association in the global table (100, 300) and decremented at each transmission of said association from one site to another site in the computer network (1).

8. Method of transmitting a global table (100, 300) of a site for implementing the updating step (E73-E84) of the classification method according to one of Claims 6 or 7, characterised in that it includes the following steps:
- the extraction (E50, E51) of the addresses (URL1, URL2) of the sites stored on said site;
- the elimination (E58) from said global table (100, 300) of the site of one or more associations when the transmission indicator (It) associated with said association or associations indicates that a predetermined number (M) of transmissions have been performed; and
- the transfer (E59) of said global table (100, 300) to the stored sites.

9. Transmission method according to Claim 8, characterised in that the transmission indicator (It) is a real number initialised to a predetermined maximum value (M) at the first storage of said association in a global table (100, 300) and decremented at each transmission of said association from one site to another site in the computer network (1), one or more associations being eliminated from the global table transmitted (Tv) when the transmission indicator (It) associated with said association or associations is equal to zero.

10. Method of constituting a group of sites (C) from a global table (100) managed by the method for the automatic classification of sites according to one of Claims 1 or 3 to 7, characterised in that there is calculated (E98), for each site stored in said global table (100), associated weighting, equal to the mean of the weighting factors associated with the associations comprising said site as a pointing site or a pointed-to site, and said sites and the associated weighting are stored in memory (E99).

11. Method of constituting a group of sites according to Claim 10, characterised in that it comprises a filtering step (E92) in which the stored sites with the lowest weighting factors are eliminated so that a predetermined number (S) of sites is stored in memory.

12. Method of constituting a group of users (R) from a global table (300) managed by the method for the automatic classification of users according to one of Claims 2 to 7, said group of users (R) using a group of sites (6) constituted by the constitution method according to one of Claims 10 or 11, characterised in that it includes the following steps:
- the calculation (E113), for each user (Ui) stored in said global table (300), of an associated weighting (w(Ui), equal to the mean of the weighting factors associated with the association comprising said user (Ui);
- the elimination (E114) of the users (Ui) having an associated weighting (w(Ui) lower than a predetermined threshold value (Q);
- the extraction (E115) from the global table (300) of the list (Suᵢ) of the sites visited by each user (Ui);
- the calculation (E116) for each user (Ui) of the sites (Cuᵢ) common to the group of sites (C) and to the list (Suᵢ) of sites visited;
- the calculation (E117) for each user (Ui) of the number (Card(Cuᵢ)) of sites (Cuᵢ) common to the group of sites (C) and to the list (Suᵢ) of sites visited;
- the calculation (E18) of the number (Card(C)) of sites stored in the group of sites (C); and
- the storage (E120) of said user (Ui) in the user group (R) when the number (Card(Cuᵢ)) of common sites is greater than a predetermined fraction of the number (Card(C)) of sites stored in the group of sites (C).

13. Method of constituting a group of users according to Claim 12, characterised in that said user (Ui) is stored in the group of users (R) when the number (Card(Cuᵢ)) of common sites is greater than one fifth of the number (Card(C)) of sites stored in the group of sites (C).

14. Method of constituting a group of users according to one of Claims 12 or 13, characterised in that it comprises a filtering step (E123) in which the users with the lowest weighting factors are eliminated so that a predetermined number (S) of users is stored in a group of users (R).

15. Device for the automatic classification of sites in a computer network, characterised in that it has:
- means (10) of receiving computer requests sent by users (4) of the computer network (1);
- means (7) of recording, on each site (S2), associations of said site (S2) and pointing sites (S1) pointing to said site (S2), from the reception of computer requests sent by users (4) of the computer network (1);
- a global table (100) adapted to store associations of pointing sites and pointed-to sites (URL1-URL2);
- means (30) of receiving global tables (Tv) of one or more adjacent sites, the global table (Tv) of an adjacent site storing at least one association containing said site (S2); and
- means (101) of updating said global table (100) of a site (S2) from associations recorded (6) and associations stored in a global table (Tv) of one or more adjacent sites.

16. Device for the automatic classification of users of a computer network (1), characterised in that it has:
- means (10) of receiving computer requests sent by users (4) of the computer network (1);
- means (35) of recording, on each site (S2), associations of said site visited (S2) and users (U1), from the reception of computer requests sent by said users;
- a global table (300) adapted to store associations of users and sites visited (U1-URL2);
- means (36) of storing, on each site (S2), pointing sites (S1) pointing to said site (S2) from the reception of computer requests sent by said users (4);
- means (30) of receiving global tables (Tv) of one or more adjacent sites, an adjacent site storing at least said site (S2) as a visited site in said global table (Tv) or as a pointing site; and
- means (301) of updating said global table (300) of a site (S2) from associations recorded (299) and associations stored in a global table (Tv) of one or more adjacent sites.

17. Device for the automatic classification of sites or users according to one of Claims 15 or 16, characterised in that the means (7, 35) of recording associations are adapted to record a weighting factor associated with each association and representing the occurrence of computer requests comprising said association, the global table (100, 300) storing a set of parameters associated with each association, said set of parameters comprising at least one weighting factor updated from weighting factors of the associations recorded (6, 299) and associations stored in a global table (Tv) of one or more adjacent sites.

18. Classification device according to Claim 17, characterised in that said set of parameters comprises a generation indicator (Ig) adapted to date each updating of the parameters associated with each association, the classification device also including means (117) of comparing the generation indicators (Ig) associated with an identical association (A1-A2) of the global table to be updated (100, 300) and the global table (Tv) of the adjacent site or sites, the updating of the parameters associated with said association (A1-A2) being effected only if the generation indicator (Ig2) for the association of the global table (Tv) of the adjacent site or sites indicates a more recent date than the generation indicator (Ig1) for the association of the global table to be updated (100, 300).

19. Classification device according to Claim 18, characterised in that the generation indicator (Ig) for an association is a real number, the updating means (101, 301) including means (115) of incrementing the generation indicator (Ig) at each updating of the parameters associated with said association from one of the associations (6, 299) recorded on said site (S2).

20. Classification device according to one of Claims 16 to 19, characterised in that the set of parameters of an association comprises a transmission indicator (It) representing the number of transmissions of said association from one site to another site in the computer network (1).

21. Classification device according to Claim 20, characterised in that the transmission indicator (It) is a real number, the updating means (101, 301) comprising means (114) of initialising the transmission indicator (It) to a predetermined maximum value (M) at the time of the first storage of said association in the global table (100, 300) and means (111) of decrementing the transmission indicator (It) at each transmission of said association from one site to another site in the computer network (1).

22. Classification device according to one of Claims 15 to 21, characterised in that it is incorporated in a microprocessor (500), a read only memory (501) comprising a program for classifying the sites or users of a computer network, and a random access memory (502) containing registers adapted to record variables modified during the running of the program.

23. Device for transmitting a global table (100, 300) of a site to means (30) of receiving global tables from a transmission device according to Claim 20, characterised in that it has:
- means (40) of extracting addresses of the sites stored on said site;
- means (41) of comparing the transmission indicator (It) associated with each association of said global table (100, 300) with a predetermined number (M) of transmissions;
- means (42) of eliminating one or more associations from said global table (100, 300) when the transmission indicator (It) associated with said association or associations indicates that a predetermined number (M) of transmissions have been performed; and
- means (43) of transferring said global table (100, 300) to the stored sites.

24. Device for transmitting a global table (100, 300) from a site to means (30) of receiving global tables of a classification device according to Claim 21, characterised in that it has:
- means (40) of extracting addresses of the sites stored on said sites;
- means (41) of comparing the transmission indicator (It) associated with each association with zero;
- means (42) of eliminating one or more associations from said global table (100, 300) when the transmission indicator (It) associated with said association or associations is equal to zero; and
- means (43) of transferring said global table to the stored sites.

25. Transmission device according to one of Claims 23 or 24, characterised in that it is incorporated in a microprocessor (500), a read only memory (501) comprising a program for transmitting the global table to the sites of a computer network, and a random access memory (502) containing registers adapted to record variables modified during the running of the program.

26. Device for constituting a group of sites (C) from a global table (100) of a device for the automatic classification of sites according to one of Claims 15 or 17 to 22, characterised in that it has:
- means of calculating (121), for each site stored in said global table, an associated weighting, equal to the mean of the weighting factors associated with the associations comprising said site as a pointing site or a pointed-to site; and
- means (123) of storing said sites and the associated weighting.

27. Device for constituting a group of sites according to Claim 26, characterised in that it comprises filtering means (122) adapted to eliminate the sites with the lowest weighting factors so that a predetermined number (S) of sites are stored.

28. Device for constituting a group of sites according to one of Claims 26 or 27, characterised in that it is incorporated in a microprocessor (500), a read only memory (501) comprising a program for constituting a group of sites in a computer network, and a random access memory (502) containing registers adapted to record variables modified during the running of the program.

29. Device for constituting a group of users (R) from a global table (300) of a device for the automatic classification of users according to one of Claims 16 to 22, said group of users (R) using a group of sites (C) constituted by the constitution device according to one of Claims 26 to 28, characterised in that it comprises:
- means (125) of calculating, for each user (Ui) stored in said global table (300), an associated weighting, equal to the mean of the weighting factors associated with the associations comprising said user;
- means (125) of comparing the associated weightings with a predetermined threshold value (Q);
- means (125) of eliminating the users with an associated weighting less than said predetermined threshold value (Q);
- means (125) of extracting, from the global table, the list (Suᵢ) of sites visited by each user;
- means (125) of calculating, for each user (Ui), sites (Cuᵢ) common to the group of sites (C) and to the list of sites visited (Suᵢ);
- means (125) of calculating, for each user (Ui), the number of sites (Cuᵢ) common to the group of sites (C) and to the list of sites visited (Suᵢ);
- means (125) of calculating the number of sites stored in the group of sites (C);
- means (125) of comparing said number of common sites (Cuᵢ) and said number of sites stored (C); and
- means (127) of storing said user (Ui) in the group of users (R) when the number of common sites (Cuᵢ) is greater than a predetermined fraction of the number of sites stored in the group of sites (C).

30. Device for constituting a group of users according to Claim 29, characterised in that it comprises filtering means (126) adapted to eliminate the stored users with the lowest weighting factors so that a predetermined number (S) of users are stored in the group of users (R).

31. Device for constituting a group of users according to one of Claims 29 or 30, characterised in that it is incorporated in a microprocessor (500), a read only memory (501) comprising a program for constituting a group of users (R) using a group of sites (C) in a computer network, and a random access memory (502) containing registers adapted to record variables modified during the running of the program.

32. Computer (50), characterised in that it has means for implementing a method of classifying sites or users according to one of Claims 1 to 7.

33. Computer (50) according to Claim 32, characterised in that it has means of implementing a method of transmitting a global table according to one of Claims 8 to 9.

34. Computer (50) according to one of Claims 32 or 33, characterised in that it has means of implementing a method of constituting a group of sites according to one of Claims 10 or 11.

35. Computer (50) according to Claim 34, characterised in that it has means of implementing a method of constituting a group of users using a group of sites, according to one of Claims 12 to 14.

36. Computer (50), characterised in that it has a device for the automatic classification of sites or users according to one of Claims 15 to 22.

37. Computer (50) according to Claim 36, characterised in that it has a device for transmitting a global table according to one of Claims 23 to 25.

38. Computer (50) according to one of Claims 36 or 37, characterised in that it has a device for constituting a group of sites according to one of Claims 26 and 28.

39. Computer (50) according to Claim 38, characterised in that it has a device for constituting a group of users using a group of sites according to one of Claims 29 to 31.

40. Computer server (5), characterised in that it has a device for the automatic classification of sites according to one of Claims 15 or 17 to 22, a device for transmitting a global table according to one of Claims 23 to 25 and a device for constituting a group of sites according to one of Claims 26 to 28.

41. Computer server (5) according to Claim 40, characterised in that it also has a device for classifying users according to one of Claims 16 to 22 and a device for constituting a group of users using a group of sites according to one of Claims 29 to 31.

42. Communication network (1), characterised in that it has means for implementing a method of classifying sites or users according to one of Claims 1 to 7.

43. Communication network (1) according to Claim 42, characterised in that it has means of implementing a method of transmitting a global table according to one of Claims 8 to 9.

44. Communication network (1) according to one of Claims 42 or 43, characterised in that it has means of implementing a method of constituting a group of sites according to one of Claims 10 or 11.

45. Communication network (1) according to Claim 44, characterised in that it has means of implementing a method of constituting a group of users using a group of sites, according to one of Claims 12 to 14.

46. Communication network (1), characterised in that it has a device for the automatic classification of sites or users according to one of Claims 15 to 22.

47. Communication network (1) according to Claim 46, characterised in that it has a device for transmitting a global table according to one of Claims 23 to 25.

48. Communication network (1) according to one of Claims 46 or 47, characterised in that it has a device for constituting a group of sites according to one of Claims 26 and 28.

49. Communication network (1) according to Claim 48, characterised in that it has a device for constituting a group of users using a group of sites according to one of Claims 29 to 31.

50. Communication network (1), characterised in that it has several computer servers (5) according to one of Claims 40 or 41.

51. Communication network (1) according to one of Claims 42 to 50, characterised in that it has several computer servers (5) forming a wide area network.

52. Information storage medium, readable by a computer or by a microprocessor, possibly removable, characterised in that it stores a program implementing a method of classifying sites or users according to one of Claims 1 to 7.

53. Information storage medium, readable by a computer or by a microprocessor, possibly removable, characterised in that it stores a program implementing a method of transmitting a global table according to one of Claims 8 to 9.

54. Information storage medium, readable by a computer or by a microprocessor, possibly removable, characterised in that it stores a program implementing a method of constituting a group of sites according to one of Claims 10 to 11.

55. Information storage medium, readable by a computer or by a microprocessor, possibly removable, characterised in that it stores a program implementing a method of constituting a group of users using a group of sites, according to one of Claims 12 to 14.
